# EUROPÄISCHE PATENTSCHRIFT

(11) **EP 4 406 089 B1**
(45) Veröffentlichungstag und Bekanntmachung des Hinweises auf die Patenterteilung: **09.07.2025**
(21) Anmeldenummer: 22777636.6
(22) Anmeldetag: 20.09.2022
(51) Int. Cl.: H02J 7/00

(54) **BATTERIELADEANLAGE**
BATTERY CHARGING SYSTEM
INSTALLATION DE CHARGE DE BATTERIE

(30) Priorität: 20.09.2021 EP 21197790
(43) Veröffentlichungstag der Anmeldung: 31.07.2024
(73) Patentinhaber: FRONIUS INTERNATIONAL GmbH, 4643 Pettenbach (AT)
(72) Erfinder: BINDER, Jürgen, 4643 Pettenbach (AT); HOLZLEITNER, Alexander, 4643 Pettenbach (AT); KLINGLMAYR, Clemens, 4643 Pettenbach (AT)
(74) Vertreter: Bratovic, Nino Maria
(86) Internationale Anmeldenummer: PCT/EP2022/076052
(87) Internationale Veröffentlichungsnummer: WO 2023/041796

(56) Entgegenhaltungen:
- WO-A1-2020/004509
- WO-A1-2021/071655
- CN-A- 102 593 887
- CN-Y- 201 294 399
- US-A1- 2017 274 791
- US-A1- 2018 331 546

## Beschreibung

Die Erfindung betrifft eine Batterieladeanlage zum Aufladen eines austauschbaren Batteriesystems, das insbesondere zum Antrieb eines Elektromotors eines Fahrzeuges eingesetzt werden kann, sowie ein entsprechendes Verfahren zum Aufladen eines austauschbaren Batteriesystems.

Elektromotoren von Elektrofahrzeugen können durch ein Batteriesystem mit elektrischer Energie versorgt werden. Eine Traktionsbatterie stellt einen mobilen elektrischen Energiespeicher dar, der zum Antrieb von Elektrofahrzeugen dient. Traktionsbatterien werden auch als Antriebsbatterie, als Hochvoltspeicher oder als Zyklenbatterie bezeichnet. Traktionsbatterien werden vor allem für Schwerlastanwendungen von elektrisch angetriebenen Flurförderfahrzeugen verwendet. Derartige Flurförderfahrzeuge werden beispielsweise in Werk- oder Lagerhallen eingesetzt. Flurförderfahrzeuge, beispielsweise Gabelstapler, weisen in vielen Fällen zwei Blei-Traktionsbatterien mit hoher Nennspannung auf, die an dem Flurförderfahrzeug zur Energieversorgung von dessen Elektromotor parallel verschaltet betrieben werden. Die beiden Blei-Traktionsbatterien des austauschbaren Batteriesystems besitzen dabei jeweils einen eigenen DC-Ladestecker, mit denen die beiden Blei-Traktionsbatterien unabhängig voneinander mithilfe von Batterieladegeräten aufgeladen werden. Anschließend wird das austauschbare Batteriesystem mit den aufgeladenen Blei-Traktionsbatterien in das Elektroflurförderfahrzeug eingesetzt und dort parallel verschaltet betrieben.

Ein Nachteil einer derartigen herkömmlichen Batterieladeanlage besteht allerdings darin, dass es während der Aufladevorgänge der verschiedenen Traktionsbatterien zu einer größeren Abweichung des Ladezustandes (State of Charge SoC) der Traktionsbatterien kommen kann. Ursachen hierfür sind beispielsweise der Ausfall eines Batterieladegeräts oder eine fehlerhafte Gerätekonfiguration eines Batterieladegeräts der Batterieladeanlage oder beispielsweise ein Stromausfall in der Batterieladeanlage. Kommt es während des Ladevorganges zu einer größeren Abweichung des Ladezustandes zwischen den Traktionsbatterien und werden die dadurch unterschiedlich geladenen Traktionsbatterien des austauschbaren Batteriesystems nach Abschluss des Ladevorganges an das Elektrofahrzeug angeschlossen, kann es zu hohen elektrischen Ausgleichsströmen kommen. Diese Ausgleichsströme können sogar zu einem Auslösen eines Überstromschutzes in dem Elektrofahrzeug und somit zu einem Ausfall des Elektrofahrzeuges führen.

In der US 2018/0331546 Al wird ein Batteriemanagementsystem offenbart, bei dem jeder einer Vielzahl von Batterien ein Batteriemonitor zugeordnet ist, welcher Sensoren aufweist, um eine Temperatur und einen Elektrolyt stand in der Batterie zu messen. Ladegerate zum Auf laden der Batterien kommunizieren mit einem jeweiligen Batteriemonitor. Ein Cloud-Server fragt von den Ladegeraten einen Ladestatus der Batterien und von den Batteriemonitoren einen Batteriestatus ab und kann Ladefehler anhand der erhaltenen Daten erkennen. Bei Vorliegen eines Ladefehlers wird die Batterie nicht für die Verwendung freigeben.

In der US 2018/331546 A1 ist ein Batteriemanagementsystem mit einem Cloudserver beschrieben, welcher Batterieladezustände aus der Entfernung überwacht.

In der WO 2020/004509 A1 ist ein Batteriemanagementsystem mit einem Server beschrieben, welcher eine Austauschbarkeit einer Batterie quantitativ auswertet und darauf basierende Informationen an eine Batteriestation übermittelt.

In der US 2017/274791 A1 sind eine Vorrichtung und ein Verfahren zum Steuern mehrerer Ladegerät zum Laden eines Fahrzeugs beschrieben. Jedes Ladegerät übermittelt eine Identifikationskennung und mindestens einen Parameter und wird darauf basierend gesteuert.

In der CN 102 593 887 A ist ein Verfahren zum Steuern zweier Ladegeräte zum Laden eines Fahrzeugs beschrieben.

Es ist eine Aufgabe der vorliegenden Erfindung, eine Batterieladeanlage zum Laden eines austauschbaren Batteriesystems zu schaffen, welche einer ungleichmäßigen Aufladung der Batterien des Batteriesystems vorbeugt, um das Auftreten von Ausgleichsströmen nach Anschluss des Batteriesystems zuverlässig zu verhindern.

Diese Aufgabe wird erfindungsgemäß durch eine Batterieladeanlage mit den in Patentanspruch 1 angegebenen Merkmalen gelöst.

Die Erfindung schafft demnach eine Batterieladeanlage zum Laden eines austauschbaren Batteriesystems, das zum Antrieb eines Elektromotors vorgesehen ist, wobei die Batterieladeanlage für jede in dem austauschbaren Batteriesystem integrierte Traktionsbatterie eine Batterieladeeinheit aufweist, wobei die Batterieladeeinheiten der Batterieladeanlage über eine Kommunikationsverbindung der Batterieladeanlage ihren jeweiligen Status zur Verriegelung von Betriebszustandsübergängen zwischen Betriebszuständen der Batterieladeanlage miteinander austauschen.

Jede der Batterieladeeinheiten nimmt einen von mehreren möglichen Status ein. Die Batterieladeeinheiten tauschen über eine Kommunikationsverbindung der Batterieladeanlage ihren jeweiligen Status miteinander aus. Die Batterieladeanlage nimmt einen von mehreren vorgegebenen Betriebszuständen ein und Betriebszustandsübergänge zwischen den Betriebszuständen der Batterieladeanlage an die von allen Batterieladeeinheiten mitgeteilten Status geknüpft.

Die Batterieladeeinheiten der Batterieladeanlage übertragen über die Kommunikationsverbindung der Batterieladeanlage ihre jeweiligen momentanen Status zur Abstimmung der Aufladevorgänge der beispielsweise über DC-Ladestecker an die Batterieladeanlage angeschlossenen Traktionsbatterien des austauschbaren Batteriesystems.

Bei der erfindungsgemäßen Batterieladeanlage erkennt jede Batterieladeeinheit auch den momentanen Status der übrigen Batterieladeeinheiten der Batterieladeanlage. Die durch die verschiedenen Batterieladeeinheiten bzw. Batterieladegeräte der Batterieladeanlage unabhängig voneinander durchgeführten Aufladevorgänge werden somit über die Kommunikationsverbindung der Batterieladeanlage verriegelt bzw. aufeinander abgestimmt. Eine Abweichung der Ladezustände (State of Charge, kurz SoC) der verschiedenen Traktionsbatterien kann durch diese SoC-Verriegelung der Batterieladeeinheiten verhindert werden. Die Verknüpfung der Betriebszustandsübergänge zwischen Betriebszuständen der Batterieladeanlage mit den Status aller Batterieladeeinheiten wird mittels einer zwischen den verschiedenen Batterieladeeinheiten bzw. Batterieladegeräten der Batterieladeanlage vorgesehenen Kommunikationsverbindung umgesetzt. Das heißt, ein Übergang von einem Betriebszustand in einen anderen erfolgt nur unter der Voraussetzung, dass alle Batterieladeeinheiten jeweils einen vorbestimmten Status über die Kommunikationsverbindung mitteilen. Somit wird zuverlässig verhindert, dass die Batterieladeanlage einen Betriebszustand einnimmt, der das Ende eines Ladevorgangs anzeigt, wenn nicht alle Batterien ausreichend geladen sind.

Gemäß manchen Ausführungsformen kann vorgesehen sein, dass jede Batterieladeeinheit ein Batterieladegerät und einen mit diesem verbundenen DC-Ladestecker aufweist, über den eine Traktionsbatterie an die jeweilige Batterieladeeinheit anschließbar ist.

Gemäß manchen Ausführungsformen kann vorgesehen sein, dass die Betriebszustandsübergänge zwischen den Betriebszuständen der Batterieladeanlage an die von allen Batterieladeeinheiten mitgeteilten Status geknüpft sind, dass ein Betriebszustandsübergang zu einem Ladeende-Betriebszustand nur dann erfolgt, wenn alle Batterieladeeinheiten einen Status "Laden beendet" einnehmen. Beispielsweise kann die Batterieladeanlage aus einem Auflade-Betriebszustand, in welchem die Batterieladeeinheiten die Traktionsbatterien aufladen, in den Ladeende-Betriebszustand übergehen. Somit wird auf einfache Weise sichergestellt, dass nur dann, wenn alle Batterien hinreichend geladen sind, wie dies durch den Status "Laden beendet" der jeweiligen Batterieeinheit angezeigt wird, in den Ladeende-Betriebszustand gewechselt wird.

Gemäß manchen Ausführungsformen kann vorgesehen sein, dass die Betriebszustandsübergänge zwischen den Betriebszuständen der Batterieladeanlage derart an die von allen Batterieladeeinheiten mitgeteilten Status geknüpft sind, dass ein Betriebszustandsübergang zu einem anderen Betriebszustand als dem Ladeende-Betriebszustand erfolgt, sobald während eines Auflade-Betriebszustands der Batterieladeanlage nicht alle Batterieladeeinheiten den Status "Batterie laden" oder "Laden beendet" mitteilen oder einnehmen. Wenn also während des Ladens der Batterien das Laden einer Batterie unterbrochen wird und die entsprechende Batterieladeeinheit in einen anderen Status wechselt, z.B. wenn ein Ladestecker abgesteckt wird, ein Fehler auftritt oder das Laden infolge einer Nutzereingabe unterbrochen wird, wechselt die Batterieladeanlage nicht in den Ladeende-Betriebszustand, sondern einen anderen Betriebszustand. Dies gilt auch dann, wenn bereits eine der mehreren Batterien vollständig geladen ist. Dadurch wird vermieden, dass es infolge einer Unterbrechung des Ladevorgangs für zumindest eine Batterie zu einem ungleichmäßigen Aufladen kommt.

Bei einer möglichen Ausführungsform der erfindungsgemäßen Batterieladeanlage weist die Batterieladeanlage zu jedem Zeitpunkt einen von mehreren vorgegebenen Betriebszuständen auf. Diese Betriebszustände weisen bei einer möglichen Ausführungsform einen Leerlauf-Betriebszustand, einen Auflade-Betriebszustand, einen Ladeende-Betriebszustand, einen Ladeunterbrechungs-Betriebszustand und/oder einen oder mehrere Fehler-Betriebszustände auf.

Je nach Anwendungsfall können die Anzahl der verschiedenen vorgegebenen Betriebszustände der Batterieladeanlage variieren. Durch den gegenseitigen Austausch des momentanen Status der verschiedenen Batterieladeinheiten der Batterieladeanlage über die Kommunikationsverbindung der Batterieladeanlage können Übergänge zwischen verschiedenen Betriebszuständen der Batterieladeanlage verriegelt werden.

Bei einer möglichen Ausführungsform der erfindungsgemäßen Batterieladeanlage nimmt die Batterieladeanlage bei Unterbrechung der Kommunikationsverbindung zwischen den Batterieladeeinheiten der Batterieladeanlage jeweils einen Fehler-Betriebszustand ein, wobei eine entsprechende Fehlermeldung erzeugt wird, welche die erfolgte Kommunikationsverbindungsunterbrechung angibt.

Bei einer möglichen Ausführungsform der erfindungsgemäßen Batterieladeanlage weisen die Batterieladeeinheiten der Batterieladeanlage jeweils einen AC-Ladestecker auf, der an ein Stromversorgungsnetz anschließbar ist.

Bei einer weiteren möglichen Ausführungsform der erfindungsgemäßen Batterieladeanlage weist die Kommunikationsverbindung zwischen den Batterieladeeinheiten der Batterieladeanlage eine drahtgebundene Kommunikationsverbindung auf. Bei dieser drahtgebundenen bzw. kabelgebundenen Kommunikationsverbindung kann es sich vorzugsweise um einen Datenbus handeln. Dieser Datenbus ist beispielsweise eine RS485-Schnittstelle oder ein Feldbus.

Bei einer alternativen Ausführungsform der erfindungsgemäßen Batterieladeanlage weist die Kommunikationsverbindung zwischen den Batterieladeeinheiten der Batterieladeanlage eine drahtlose Kommunikationsverbindung auf. Diese drahtlose Kommunikationsverbindung wird beispielsweise durch eine Bluetooth-Verbindung gebildet.

Bei einer weiteren möglichen Ausführungsform der erfindungsgemäßen Batterieladeanlage übertragen die Batterieladeeinheiten der Batterieladeanlage über die Kommunikationsverbindung neben ihrem momentanen Status zusätzlich Konfigurationsdaten, welche eine Hardware- und/oder eine Softwarekonfiguration der jeweiligen Batterieladeeinheiten bzw. Batterieladegeräte angeben.

Bei einer möglichen Ausführungsform werden der jeweilige momentane Status der Batterieladeeinheiten und die Konfigurationsdaten der Batterieladeeinheiten über die gleiche Kommunikationsverbindung der Batterieladeanlage zwischen den Batterieladeeinheiten der Batterieladeanlage übertragen bzw. ausgetauscht. Bei einer alternativen Ausführungsform weist die Batterieladeanlage separate Kommunikationsverbindungen für die Übertragung der Statusangaben und für die Übertragung der Konfigurationsdaten der Batterieladeeinheiten der Batterieladeanlage auf.

Bei einer weiteren möglichen Ausführungsform der erfindungsgemäßen Batterieladeanlage vergleicht jede Batterieladeeinheit der Batterieladeanlage ihre eigene momentane Hardware- und/oder Softwarekonfiguration anhand der über die Kommunikationsverbindung empfangenen Konfigurationsdaten mit der Hardware- und/oder Softwarekonfiguration der übrigen Batterieladeeinheiten der Batterieladeanlage , wobei die Batterieladeanlage bei Bestehen einer signifikanten Konfigurationsabweichung einen entsprechenden Fehler-Betriebszustand einnimmt und eine entsprechende Fehlermeldung erzeugt.

Bei einer weiteren möglichen Ausführungsform der erfindungsgemäßen Batterieladeanlage überträgt jede Batterieladeeinheit der Batterieladeanlage ihren jeweiligen momentanen Status und/oder ihre Konfigurationsdaten bei Auftreten eines Ereignisses oder in regelmäßigen Zeitabständen über die Kommunikationsverbindung der Batterieladeanlage an die übrigen Batterieladeeinheiten der Batterieladeanlage.

Bei einer weiteren möglichen Ausführungsform der erfindungsgemäßen Batterieladeanlage weist jede Batterieladeeinheit der Batterieladeanlage eine Nutzerschnittstelle mit einer Eingabeeinheit zur Änderung des Status der zugehörigen Batterieladeeinheit und/oder zur Änderung eines Betriebszustandes der Batterieladeanlage und/oder mit einer Ausgabeeinheit zum Anzeigen des Status der zugehörigen Batterieladeeinheit und/oder zum Anzeigen des Betriebszustandes der Batterieladeanlage auf.

Bei einer weiteren möglichen Ausführungsform der erfindungsgemäßen Batterieladeanlage ist die Kommunikationsverbindung der Batterieladeanlage über ein Gateway der Batterieladeanlage mit dem Internet verbunden.

Bei einer weiteren möglichen Ausführungsform der erfindungsgemäßen Batterieladeanlage werden die über die Kommunikationsverbindung der Batterieladeanlage übertragenen Statusinformationen hinsichtlich des momentanen Status der Batterieladeeinheiten in einem lokalen Speicher der Batterieladeanlage oder in einer entfernten Datenbank gespeichert.

Bei einer weiteren möglichen Ausführungsform der erfindungsgemäßen Batterieladeanlage weist die Batterieladeeinheit der Batterieladeanlage jeweils eine Anschlusserkennungseinheit zur Erkennung eines elektrischen Anschlusses einer Traktionsbatterie an den zugehörigen DC-Ladestecker der Batterieladeeinheit auf.

Bei einer weiteren möglichen Ausführungsform der erfindungsgemäßen Batterieladeanlage weist die Batterieladeeinheit der Batterieladeanlage jeweils eine Leseeinheit zum Auslesen von Daten aus einem Datenspeicher einer über einen zugehörigen DC-Ladestecker der Batterieladeeinheit angeschlossenen Traktionsbatterie auf.

Bei einer weiteren möglichen Ausführungsform der erfindungsgemäßen Batterieladeanlage weist die Batterieladeeinheit der Batterieladeanlage jeweils eine Schreibeinheit zum Einschreiben von Daten in einen Datenspeicher einer über den zugehörigen DC-Ladestecker der Batterieladeeinheit angeschlossenen Traktionsbatterie auf.

Die Erfindung schafft zudem ein Verfahren zum Laden von Traktionsbatterien eines austauschbaren Batteriesystems mit den in Patentanspruch 11 angegebenen Merkmalen.

Die Erfindung schafft demnach ein Verfahren zum Laden von Traktionsbatterien eines austauschbaren Batteriesystems, das zum Antrieb eines Elektromotors verwendet wird, wobei das Laden der in dem Batteriesystem integrierten Traktionsbatterien jeweils durch zugehörige Batterieladeeinheiten einer Batterieladeanlage separat erfolgt, wobei die Batterieladeeinheiten der Batterieladeanlage über eine Kommunikationsverbindung der Batterieladeanlage ihren jeweiligen Status zur Verriegelung von Betriebszustandsübergängen zwischen Betriebszuständen der Batterieladeanlage miteinander austauschen. Ein Ausführen eines Betriebszustandsübergangs zwischen Betriebszuständen der Batterieladeanlage erfolgt geknüpft an die von allen Batterieladeeinheiten mitgeteilten Status

Im Weiteren werden mögliche Ausführungsformen der erfindungsgemäßen Batterieladeanlage und des erfindungsgemäßen Verfahrens zum Aufladen von Traktionsbatterien eines austauschbaren Batteriesystems unter Bezugnahme auf die beigefügten Figuren näher erläutert.

Es zeigen:
- Fig. 1: ein Blockschaltbild zur Darstellung eines Ausführungsbeispiels einer erfindungsgemäßen Batterieladeanlage zum Laden eines austauschbaren Batteriesystems;
- Fig. 2: ein mittels der erfindungsgemäßen Batterieladeanlage aufgeladenes Batteriesystem im eingebauten Zustand;
- Fig. 3: ein Zustandsdiagramm zur Darstellung eines Ausführungsbeispiels einer erfindungsgemäßen Batterieladeanlage;
- Fign. 4 und 5: Beispiele zur Erläuterung der Funktionsweise des erfindungsgemäßen Verfahrens und der erfindungsgemäßen Batterieladeanlage.

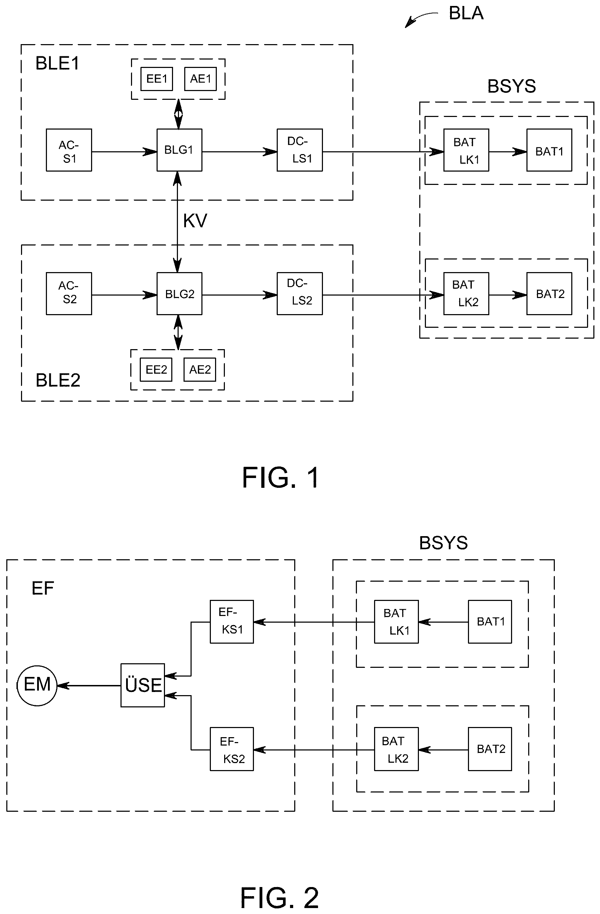

Fig. 1 zeigt ein Blockschaltbild zur Darstellung eines Ausführungsbeispiels einer erfindungsgemäßen Batterieladeanlage BLA. Bei dem in Fig. 1 dargestellten Ausführungsbeispiel umfasst die Batterieladeanlage BLA zwei Batterieladeeinheiten BLE. Die Batterieladeeinheiten BLE1, BLE2 der in Fig. 1 dargestellten Batterieladeanlage BLA enthalten jeweils ein Batterieladegerät BLG1, BLG2, das über einen AC-Stecker AC-S an ein Wechselstrom(AC)-Stromversorgungsnetz anschließbar sind. Darüber hinaus verfügt jede Batterieladeeinheit BLE über einen optionalen DC-Ladestecker DC-LS zum Anschluss einer Batterie, insbesondere einer Traktionsbatterie BAT, eines austauschbaren Batteriesystems BSYS. Die Batterieladeeinheiten BLE1, BLE2 verfügen jeweils über eine optionale Eingabeeinheit EE und eine optionale Ausgabeeinheit AE. Wie in Fig. 1 dargestellt hat die erste Batterieladeeinheit BLE1 eine Eingabeeinheit EE1 und eine Ausgabeeinheit AE1. Die zweite Batterieladeeinheit BLE2 hat eine Eingabeeinheit EE2 und eine Ausgabeeinheit AE2.

Jede Batterie BAT1, BAT2 des in Fig. 1 dargestellten austauschbaren Batteriesystems BSYS verfügt ihrerseits über einen Batterieladekupplung BAT-LK zum Anschluss an eine entsprechenden Batterieladeeinheit BLE, z.B. über deren DC-Ladestecker DC-LS. Fig.1 zeigt einen Fall, in welchem die Batterien BAT1, BAT2 geladen werden, weshalb der Ladestrom in Stromrichtung entsprechend den in Fig. 1 dargestellten Pfeilen hin zu den Batterien BAT1,BAT2 fließt. Grundsätzlich ist diese Verbindung sowie die Verbindung zwischen BAT-LK und Batterie BAT jedoch bidirektional, da die Batterien BAT1,BAT2 im eingebauten Zustand des Batteriesystems BSYS gemäß Fig. 2 den Elektromotor EM des Elektrofahrzeugs EF mit Strom versorgen.

Bei den Batterien BAT1, BAT2 des austauschbaren Batteriesystems BSYS handelt es sich vorzugsweise um Traktionsbatterien bzw. Antriebsbatterien BAT für einen Elektromotor EM. Diese Traktionsbatterien BAT weisen bei einer möglichen Ausführungsform eine Nennspannung von 96 Volt oder 120 Volt auf. Die Ladekapazität kann beispielsweise zwischen 1000 und 1500 Amperestunden Ah liegen. Jede Batterie BAT1, BAT2 verfügt, wie oben bereits erwähnt, über eine zugehörige Batterieladekupplung BAT-LK und kann unabhängig von den übrigen Batterien des austauschbaren Batteriesystems BSYS über ihre eigene Batterieladekupplung BAT-LK aufgeladen werden. Bei einer möglichen Ausführungsform verfügt das austauschbare Batteriesystem BSYS über zwei Blei-Traktionsbatterien BAT1, BAT2 mit einer hohen Nennspannung von 96 Volt oder 120 Volt. Die Blei-Traktionsbatterien weisen ein relativ hohes Gewicht auf. Das hohe Gewicht der Blei-Akkumulatoren bzw. Blei-Traktionsbatterien kann beispielsweise bei Gabelstaplern als Gegengewicht an der Hinterachse dienen. Grundsätzlich ist jedoch das erfindungsgemäße Verfahren unabhängig vom Typ der Batterie BAT. Wie bereits beschrieben ist das erfindungsgemäße Verfahren auch für mehr als zwei Batterien BAT geeignet.

Die Blei-Traktionsbatterien BAT des austauschbaren Batteriesystems BSYS können seriell verschaltbare Batteriezellen aufweisen. Beispielsweise können 40 einzelne Batteriezellen mit einer Nennspannung von jeweils 2 Volt seriell zur Bildung einer Batterie mit einer Nennspannung von 80 Volt verschaltet sein. Die Anzahl der seriell verschalteten Batteriezellen kann je nach Anwendungsfall variieren. Die Blei-Traktionsbatterien können kurzzeitig hohe Stromstärken abgeben, d.h., sie besitzen eine hohe Leistungsdichte. Diese Eigenschaft ist z.B. für Elektrofahrzeuge EF mit Chargerbatterien notwendig. Andererseits führen Kurzschlüsse aufgrund dieser Eigenschaft zu hohen Stromstärken.

Fig. 2 zeigt ein austauschbares Batteriesystem BSYS mit zwei Batterien BAT1, BAT2 in eingebautem Zustand, d.h. nach Anschluss an ein Elektrofahrzeug EF. Das Elektrofahrzeug EF enthält einen Elektromotor EM, welcher über eine Überstromschutzeinrichtung ÜSE an zwei parallel verschaltete Elektrofahrzeug-Kabelstecker EF-KS des Elektrofahrzeugs EF angeschlossen ist. Die Parallelschaltung der Batterien BAT1, BAT2 erfolgt wie in Fig.2 dargestellt durch die Überstromschutzeinrichtung ÜSE. Das Elektrofahrzeug EF verfügt somit in dem dargestellten Ausführungsbeispiel über zwei Kabelstecker EF-KS1, EF-KS2 zum Anschluss an die zugehörigen Batterieladekupplungen BAT-LK1, BAT-LK2 des austauschbaren Batteriesystems BSYS. Nach Anschluss des austauschbaren Batteriesystems BSYS an das Elektrofahrzeug EF wird der Elektromotor EM durch die beiden Batterien BAT1, BAT2 des austauschbaren Batteriesystems BSYS mit Strom versorgt. Bei dem Elektrofahrzeug EF kann es sich beispielsweise um ein Flurförderfahrzeug, insbesondere einen Gabelstapler, handeln.

Die in Fig.1 dargestellte erfindungsgemäße Batterieladeanlage BLA sorgt aufgrund des Austausches der Statusinformation über eine Kommunikationsverbindung KV zwischen den Batterieladeeinheiten BLE dafür, dass nach Abkopplung des Batteriesystems BSYS von der Batterieladeanlage BLA und anschließendem Einbau des Batteriesystems BSYS in das Elektrofahrzeug EF keine zu hohen elektrischen Ausgleichsströme zwischen den Batterien BAT1, BAT2 des austauschbaren Batteriesystems BSYS auftreten, welche beispielsweise zum Auslösen des Überstromschutzes ÜSE innerhalb des Elektrofahrzeuges EF führen können.

Die in Fig. 1 dargestellte Batterieladeanlage BLA weist für jede in dem austauschbaren Batteriesystem BSYS integrierte Traktionsbatterie BAT1, BAT2 einen DC-Ladestecker DC-LS auf, der mit einem zugehörigen Batterieladegerät BLG der Batterieladeeinheit BLE verbunden ist. Die beiden Batterieladegeräte BLG1, BLG2 der beiden Batterieladeeinheiten BLE sind über eine Kommunikationsverbindung KV miteinander verbunden. Die beiden Batterieladegeräte BLG1, BLG2 der Batterieladeanlage BLA tauschen über die Kommunikationsverbindung KV ihren jeweiligen momentanen Status aus, um Betriebszustandsübergänge zwischen Betriebszuständen BZ der Batterieladeanlage BLA zu verriegeln und die Aufladevorgänge der über die DC-Ladestecker DC-LS an die Batterieladeanlage BLA angeschlossenen Traktionsbatterien BAT1, BAT2 abzustimmen. Über die in Fig. 1 dargestellte Kommunikationsverbindung KV werden die beiden Batterieladegeräte BLG1, BLG2 der Batterieladeeinheiten BLE1, BLE2 der Batterieladeanlage BLA miteinander hinsichtlich der Aufladevorgänge und des Ladezustandes SoC der Batterien BAT über den Betriebszustand BZ der Batterieladeanlage BLA miteinander verriegelt. Allgemein sind Betriebszustandsübergänge zwischen den Betriebszuständen BZ der Batterieladeanlage BLA an die von allen Batterieladeeinheiten BLE mitgeteilten Status geknüpft.

Bei einer möglichen Ausführungsform wird die Verriegelung oder Verknüpfung mittels eines kabelgebundenen Bussystems umgesetzt bzw. implementiert. Bei einer alternativen Ausführungsform kann die Kommunikationsverbindung KV zwischen den beiden Batterieladegeräten BLG1, BLG2 auch eine drahtlose Kommunikationsverbindung KV aufweisen. Bei dieser drahtlosen Kommunikationsverbindung KV handelt es sich beispielsweise um eine Bluetooth-Kommunikationsverbindung zwischen den beiden Batterieladegeräten BLG1, BLG2. Eine drahtgebundene Kommunikationsverbindung KV kann beispielsweise über eine RS485-Schnittstelle oder über einen Feldbus, beispielsweise den CAN-Feldbus, hergestellt werden.

Bei Unterbrechung der Kommunikationsverbindung KV zwischen den beiden Batterieladegeräten BLG1, BLG2 der Batterieladeeinheiten BLE1, BLE2 nehmen die Batterieladeeinheiten BLE bei einer möglichen Ausführungsform einen entsprechenden Fehler-Status ein und erzeugen automatisch eine entsprechende Fehlermeldung, welche die erfolgte ungewollte Kommunikationsverbindungsunterbrechung angibt bzw. anzeigt.

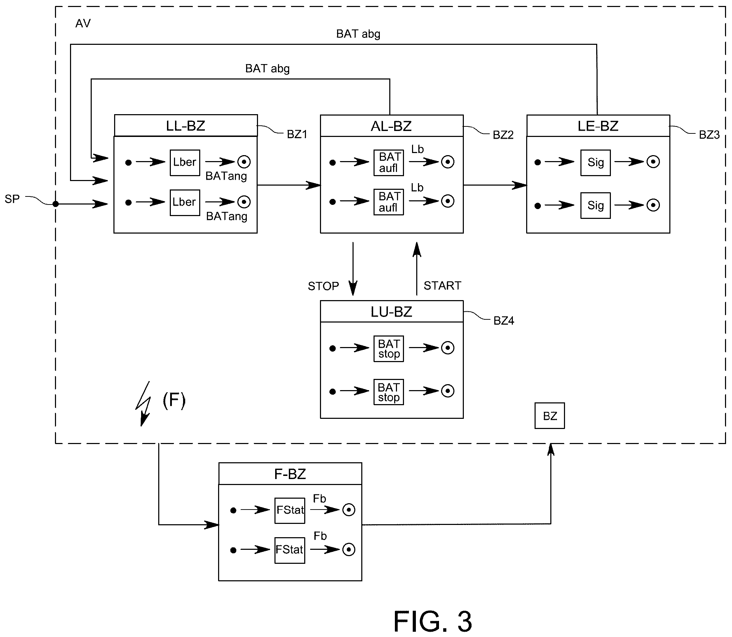

Die Batterieladeanlage BLA nimmt zu jedem Zeitpunkt jeweils einen von mehreren vorgegebenen normalen Betriebszuständen BZ, beispielsweise einen der Betriebszustände BZ1,BZ2,BZ,3,BZ4, oder eine Fehler-Betriebszustand F-BZ ein, wie in dem Zustandsdiagramm in Fig.3 schematisch dargestellt.

In dem Zustandsdiagramm gemäß Fig.3 stellen die Pfeile zwischen den verschiedenen Betriebszuständen BZ jeweils Betriebszustandsübergänge bzw. Betriebszustandswechsel von einem Betriebszustand der Batterieladeanlage BLA in einen anderen Betriebszustand der Batterieladeanlage BLA dar.

Das Zustandsdiagramm gemäß Fig.3 zeigt das gesamte Aufladeverfahren AV. Das Aufladeverfahren AV umfasst in den verschiedenen Betriebszuständen BZ der Batterieladeanlage BLA unterschiedliche Aufladevorgänge, die jeweils durch Batterieladegeräte BLG der Batterieladeeinheiten BLE zeitlich voneinander unabhängig ausgeführt werden können.

Bei einer möglichen Ausführungsform umfassen die Betriebszustände BZ der Batterieladeanlage BLA einen Leerlauf(LL)-Betriebszustand (BZ1), einen Auflade(AL)-Betriebszustand (BZ2), einen Ladeende(LE)-Betriebszustand (BZ3), einen La-deunterbrechungs(LU)-Betriebszustand (BZ4) und/oder einen oder mehrere Fehler(F)-Betriebszustände (F-BZ), wie auch in dem Zustandsdiagramm eines Aufladeverfahrens AV in Fig. 3 schematisch dargestellt. Sofern die Hardwarevoraussetzung gegeben ist, d.h**.** speziell die Kommunikationsverbindung KV zwischen den Batterieladegeräten BLG bzw. zwischen Controllern (nicht gezeigt) der Betriebsladegeräte BLG betriebsbereit ist, kann das Aufladeverfahren AV durchgeführt bzw. gestartet werden. Die Kommunikation über die Kommunikationsverbindung KV erfolgt, sobald die Batterieladegeräte BLG der Batterieladeinheiten BLE der Batterieladeanlage BLA aktiv sind.

Die Verriegelung der Betriebszustandsübergänge zwischen Betriebszuständen BZ der Batterieladeanlage BLA durch die Kommunikationsverbindung KV ist in Fig. 3 anhand der Punkt-Symbole bzw. Punkt-Kreis-Symbole dargestellt. Das Punkt-Symbol stellt entsprechend einen Startpunkt dar, das Punkt-Kreis-Symbol einen Endpunkt. Es weisen vorzugsweise beide Batterieladegeräte BLG1, BLG2 der beiden Batterieladeeinheiten BLE1, BLE2 der Batterieladeanlage BLA denselben Status auf, bevor der Betriebszustand BZ der Batterieladeanlage BLA gewechselt bzw. umgeschaltet wird. Beispielsweise müssen beide Batterieladeeinheiten BLE1, BLE2 für einen Betriebszustandswechsel bzw. einen Betriebszustandsübergang im Leerlauf-Betriebszustand LL-BZ der Batterieladeanlage BLA den Status "Batterie angesteckt"(BATang), im Auflade-Betriebszustand AL-BZ der Batterieladeanlage BLA den Status "Laden beendet" (Lb)oder im Fehler-Betriebszustand F-BZ der Batterieladeanlage BLA den Status "Fehler behoben" (Fb) aufweisen, damit ein Betriebszustandsübergang in einen anderen Betriebszustand BZ der Batterieladeanlage BLA erfolgen kann. Allgemein sind die Betriebszustandsübergänge zwischen den Betriebszuständen BZ der Batterieladeanlage BLA somit an die von allen Batterieladeeinheiten BLE mitgeteilten Status geknüpft.

Das Aufladeverfahrens AV wird gemäß dem Startpunkt SP gestartet, also sobald beispielsweise eine Hauptstromversorgung eingeschaltet wird.

In dem Leerlauf-Betriebszustand LL-BZ der Batterieladeanlage BLA sind die Batterieladegeräte BLG1, BLG2 die Batterieladeeinheiten BLE1, BLE2 der Batterieladeanlage BLA jeweils zur Durchführung eines Aufladevorganges innerhalb des Aufladeverfahrens AV bereit und warten jeweils im Status "ladebereit" (Lber)auf den Anschluss einer aufzuladenden Batterie BAT an den entsprechenden DC-Ladestecker DC-LS der zugehörigen Batterieladeeinheit BLE1, BLE2.

Wird die erste Batterie BAT1 des Batteriesystems BSYS an den DC-Ladestecker DC-LS1 der ersten Batterieladeinheit BLE1 der Batterieladeanlage BLA angeschlossen, meldet die erste Batterieladeeinheit BLE1 den neuen Status "Batterie angesteckt" (BATang) über die Kommunikationsverbindung KV an die zweite Batterieladeeinheit BLE2 der Batterieladeanlage BLA. Sobald die zweite Batterie BAT2 des Batteriesystems BSYS an den DC-Ladestecker DC-LS2 der zweiten Batterieladeinheit BLE2 der Batterieladeanlage BLA angeschlossen wird, meldet die zweite Batterieladeeinheit BLE2 ebenfalls den neuen Status "Batterie angesteckt" (BATang) über die Kommunikationsverbindung KV an die erste Batterieladeeinheit BLE2 der Batterieladeanlage BLA. Erst wenn beide Batterieladeinheiten BLE1, BLE2 der Batterieladeanlage BLA den Status "Batterie angesteckt" (BATang) melden, erfolgt ein Betriebszustandsübergang der Batterieladeanlage BLA von dem Leerlauf-Betriebszustand LL-BZ in den Aufladebetriebszustand AL-BZ, wie in Fig.3 dargestellt. Die Reihenfolge kann auch umgekehrt sein, d.h. zunächst kann die zweite Batterieladeinheit BLE2 den Status "Batterie angesteckt" (BATang) anzeigen bzw. melden und anschließend erfolgt der Betriebszustandsübergang der Batterieladeanlage BLA in den Aufladebetriebszustand AL-BZ sobald auch die erste Batterieladeinheit BLE1 den gleichen Status "Batterie angesteckt" (BATang) über die Kommunikationsverbindung KV meldet. Der Betriebszustandsübergang vom Leerlauf-Betriebszustand LL-BZ in den Aufladebetriebszustand AL-BZ ist somit an die von allen Batterieladeeinheiten BLE mitgeteilten Status geknüpft. Insbesondere kann, wenn alle Batterieladeeinheiten BLE denselben Status, hier "Batterie angesteckt" (BATang), mitteilen, ein Betriebszustandsübergang erfolgen.

Während des Auflade-Betriebszustandes AL-BZ der Batterieladeanlage BLA werden die entsprechenden Batterien BAT1, BAT2 des austauschbaren Batteriesystems BSYS durch die Batterieladegeräte BLG1, BLG2 der Batterieladeeinheiten BLE1, BLE2 über die DC-Ladestecker DC-LS1, DC-LS2 der Batterieladeeinheiten BLE1, BLE2 und die Batterieladekupplungen BAT-LK1, BAT-LK2 der Batterien BAT1, BAT2 in zwei unabhängigen Aufladevorgängen aufgeladen. Die hierfür benötigte Energie bzw. der hierfür benötigte Strom erhält die Batterieladeeinheit BLE jeweils über ihren AC-Anschluss-Stecker AC-S von einem Stromversorgungsnetz. Die Batterieladeinheiten BLE können in dem Aufladebetriebszustand AL-BZ der Batterieladeanlage BLA während des jeweiligen Aufladevorganges jeweils den Status "Batterie wird aufgeladen" (BATaufl)über die Kommunikationsverbindung KV melden.

Sobald der durch das Batterieladegerät BLG einer Batterieladeinheit BLE vorgenommene Aufladevorgang an einer Batterie BAT abgeschlossen ist, nimmt die entsprechende Batterieladeeinheit BLE einen Status "Laden beendet" (Lb) ein und meldet dies über die Kommunikationsverbindung KV. Sobald beide Batterieladeinheiten BLE1,BLE2 den Status "Laden beendet"(Lb) über die Kommunikationsverbindung KV gemeldet haben, erfolgt automatisch ein Betriebszustandswechsel bzw. ein Umschalten des Betriebszustands der Batterieladeanlage BLA von dem bisherigen Aufladebetriebszustand AL-BZ in den Ladeende-Betriebszustand LE-BZ in einem Betriebszustandsübergang, wie in Fig. 3 schematisch dargestellt. Der Betriebszustandsübergang vom Aufladebetriebszustand AL-BZ in den Ladeende-Betriebszustand LE-BZ ist somit an die von allen Batterieladeeinheiten BLE mitgeteilten Status geknüpft. Nur wenn alle Batterieladeeinheiten BLE denselben Status, hier "Laden beendet"(Lb) über die Kommunikationsverbindung KV gemeldet haben, erfolgt der Betriebszustandsübergang.

In dem Ladeende-Betriebszustand LE-BZ der Batterieladeanlage BLA wird dem Nutzer mittels der Ausgabeeinheiten AE signalisiert (Status "signalisieren" Sig), dass die Aufladevorgänge an den beiden Batterien BAT1,BAT2 des Batteriesystems BSYS abgeschlossen sind und das austauschbare Batteriesystem BSYS mit den darin enthaltenen Batterien BAT1,BAT2 nunmehr gefahrlos in das Elektrofahrzeug EF eingebaut werden kann.

Wird zumindest eine Batterie BAT während des Auflade-Betriebszustandes AL-BZ oder während des Ladeende-Betriebszustandes LL-BZ von dem Batterieladegerät BLG der zugehörigen Batterieladeeinheit BLE abgesteckt, wird von der betroffenen Batterieladeinheit BLE der Status "Batterie abgesteckt" (BATabg) über die Kommunikationsverbindung KV gemeldet und die Batterieladeanlage BLA wechselt wieder in den Leerlauf-Betriebszustand LL-BZ bzw. wird in diesen umgeschaltet, wie in Fig.3 schematisch dargestellt. Somit ist Betriebszustandsübergang vom Aufladebetriebszustand AL-BZ in den Leerlauf-Betriebszustand LL-BZ an die von allen Batterieladeeinheiten BLE mitgeteilten Status geknüpft. Sobald eine der Batterieladeeinheiten BLE den Status "Batterie abgesteckt" (BATabg) über die Kommunikationsverbindung KV meldet, erfolgt der Betriebszustandsübergang. Somit kann allgemein vorgesehen sein, dass ein Betriebszustandsübergang zu einem anderen Betriebszustand als dem Ladeende-Betriebszustand LE-BZ erfolgt, sobald während eines Auflade-Betriebszustands AL-BZ der Batterieladeanlage BLA nicht alle Batterieladeeinheiten BLE den Status "Batterie laden" (BATaufl) oder "Laden beendet" Lb mitteilen oder einnehmen.

Der durch ein Batterieladegerät BLG einer Batterieladeeinheit BLE der Batterieladeanlage BLA vorgenommene Aufladevorgang kann bei einer möglichen Ausführungsform über eine Nutzerschnittstelle beispielsweise mithilfe eines Eingabeelementes EE seitens eines Nutzers unterbrochen werden. Bei einer möglichen Ausführungsform verfügt jede Batterieladeeinheit BLE zusätzlich über eine Nutzerschnittstelle.

Die Nutzerschnittstelle umfasst vorzugsweise eine Eingabeeinheit EE zur Änderung eines momentanen Status der Batterieladeeinheit BLE und eine Ausgabeeinheit AE zur Anzeige des momentanen Status der Batterieladeeinheit BLE. Die Eingabeeinheit EE der Nutzerschnittstelle der Batterieladeeinheit BLE wird beispielsweise durch einen Druckknopf gebildet, mit dessen Hilfe ein Nutzer einen Aufladevorgang zum Aufladen einer Batterie BAT durch ein Batterieladegerät BLG einer Batterieladeeinheit BLE unterbrechen kann. Wird beispielsweise ein Ladestoppdruckknopf durch den Nutzer gedrückt (Stop), ändert sich der momentane Status der entsprechenden Batterieladeeinheit BLE von dem Status "Batterie wird aufladen" (BATaufl) in den Status "Batterieladestop" (BATstop). Wird an der Nutzerschnittstelle der Batterieladeeinheit BLE anschließend durch den Nutzer beispielsweise ein Ladestartknopf gedrückt (Start), nimmt die entsprechende Batterieladeeinheit BLE wieder den Status "Batterie wird aufgeladen"( BATaufl) ein. Auch in diesem Fall ist somit vorgesehen, dass ein Betriebszustandsübergang zu einem anderen Betriebszustand als dem Ladeende-Betriebszustand LE-BZ erfolgt, sobald während eines Auflade-Betriebszustands AL-BZ der Batterieladeanlage BLA nicht alle Batterieladeeinheiten BLE den Status "Batterie laden" (BATaufl) oder "Laden beendet" Lb mitteilen oder einnehmen.

Die Batterieladeeinheiten BLE können bei Auftreten eines Fehlers F innerhalb der Batterieladeinheit BLE einen entsprechenden Fehler-Status F-Stat einnehmen. Der Fehler F kann entsprechend unvorhergesehen zu einem beliebigen Zeitpunkt während des Aufladeverfahrens AV auftreten. Der aktuelle Status einer Batterieladeinheit BLE und/oder der Betriebszustand BZ der gesamten Batterieladeanlage BLA wird vorzugsweise gespeichert - in Fig. 3 symbolisiert durch ein Quadrat, sodass bei Auftreten des Fehlers F dieser Status oder Betriebszustand BZ bekannt ist. Es kann dann in den Fehler-Betriebszustand F-BZ der Batterieladeanlage BLA gewechselt bzw. umgeschaltet werden. Wird beispielsweise die Kommunikationsverbindung KV zwischen den Batterieladeladegeräten BLG1, BLG2 der Batterieladeeinheiten BLE1, BLE2 unterbrochen, nehmen die betroffenen Batterieladeeinheiten BLE1, BLE2 der Batterieladeanlage BLA jeweils einen entsprechenden Fehlerstatus Fstat und die Batterieladeanlage BLA einen Fehler-Betriebszustand F-BZ ein. Auch in diesem Fall ist somit vorgesehen, dass ein Betriebszustandsübergang zu einem anderen Betriebszustand als dem Ladeende-Betriebszustand LE-BZ erfolgt, sobald während eines Auflade-Betriebszustands AL-BZ der Batterieladeanlage BLA nicht alle Batterieladeeinheiten BLE den Status "Batterie laden" (BATaufl) oder "Laden beendet" Lb mitteilen oder einnehmen. Es kann optional zusätzlich eine Fehlermeldung erzeugt werden, welche die erfolgte Kommunikationsverbindungsunterbrechung anzeigt. Diese Fehlermeldung kann beispielsweise über die Ausgabeeinheiten AE der Nutzerschnittstellen der Batterieladeeinheiten BLE einem Nutzer der Batterieladeanlage BLA angezeigt werden. Sobald der Fehler beseitigt ist bzw. die Kommunikationsverbindung KV wieder hergestellt ist, kann bei einer möglichen Ausführungsform die entsprechende Batterieladeeinheit BLE aus dem Fehlerstatus in den gespeicherten Status vor Auftreten des Fehlers zurückkehren. Sobald der Fehler behoben ist, nehmen die Batterieladeeinheiten BLE wieder den vor dem Auftreten des Fehlers gespeicherten Status ein und es erfolgt ein Wechsel bzw. ein Umschalten bzw. ein Betriebszustandsübergang der Batterieladeanlage BLA aus dem Fehler-Betriebszustand F-BZ in den zuvor gespeicherten Betriebszustand BZ.

Bei einer möglichen Ausführungsform der erfindungsgemäßen Batterieladeanlage BLA ist diese über ein Gateway mit einem Datennetzwerk, beispielsweise dem Internet, verbunden. Die über die Kommunikationsverbindung KV der Batterieladeanlage BLA ausgetauschten momentanen Statusinformationen der verschiedenen Batterieladeeinheiten BLE und die zeitlich nacheinander eingenommenen Betriebszustände BZ der Batterieladeanlage BLA können bei einer möglichen Ausführungsform in einem lokalen Speicher der Batterieladeanlage BLA mit einem Zeitstempel versehen zwischengespeichert werden. Bei einer weiteren möglichen Ausführungsform können die zwischen den Batterieladeeinheiten BLE über die Kommunikationsverbindung KV ausgetauschten Statusinformationen bzw. Statusdaten und die Betriebszustände BZ der Batterieladeanlage BLA auch in einem entfernten Datenspeicher oder einer Datenbank zur weiteren Auswertung gespeichert werden. Beispielsweise können die gespeicherten Daten hinsichtlich einer Fehleranalyse eines aufgetretenen Betriebsfehlers ausgewertet werden.

Wie man aus dem Zustandsdiagramm gemäß Fig. 3 erkennen kann, sind die verschiedenen Batterieladeeinheiten BLE der Batterieladeanlage BLA hinsichtlich der Aufladevorgänge der Traktionsbatterien BAT miteinander verriegelt. Die Verriegelung erfolgt entsprechend über die Kommunikationsverbindung KV, indem die Betriebszustandsübergänge zwischen den verschiedenen Betriebszuständen BZ der Batterieladeanlage BLA mit dem Status der Batterieladeeinheiten synchronisiert werden. Allgemein sind die Betriebszustandsübergänge zwischen den Betriebszuständen BZ an die von allen Batterieladeeinheiten BLE mitgeteilten Status geknüpft. Die Betriebszustände BZ und Betriebszustandsübergänge werden vorzugsweise durch Ausgabeeinheiten AE der Batterieladeeinheiten BLE angezeigt. Die physikalischen Aufladevorgänge der Batterien BAT durch die Batterieladegeräte BLG der Batterieladeinheiten BLE können grundsätzlich auch unabhängig voneinander erfolgen und demnach auch zu unterschiedlichen Zeitpunkten beendet sein. Die Ausgabeeinheit AE zeigt aber gemäß der Verriegelung erst an, dass das Aufladeverfahren AV des gesamten Batteriesystem BSYS beendet ist, wenn alle Aufladevorgänge an den in dem Batteriesystem BSYS enthaltenen Batterien BAT unabhängig voneinander abgeschlossen worden sind. Es wird somit auf diese Weise verhindert, dass die verschiedenen Batterien BAT des austauschbaren Batteriesystems BSYS unterschiedliche Ladezustände SoC einnehmen und es nach Anschluss des austauschbaren Batteriesystems BSYS an das Elektrofahrzeug EF zu ungewollten hohen elektrischen Ausgleichsströmen kommen kann.

Bei einer weiteren möglichen Ausführungsform der erfindungsgemäßen Batterieladeanlage BLA können die Batterieladeeinheiten BLE der Batterieladeanlage BLA über die Kommunikationsverbindung KV neben ihren momentanen Status auch Konfigurationsdaten KDAT übertragen, welche eine Hardware- und/oder Softwarekonfiguration der jeweiligen Batterieladeeinheiten BLE angeben. Jede Batterieladeeinheit BLE kann ihre eigene Hardware- und/oder Softwarekonfiguration anhand der über die Kommunikationsverbindung KV empfangenen Konfigurationsdaten KDAT mit der momentanen Hardware- und/oder Softwarekonfiguration der übrigen Batterieladeeinheiten BLE der Batterieladeanlage BLA vergleichen. Bei Bestehen einer signifikanten Konfigurationsabweichung kann die Batterieladeanlage BLA einen entsprechenden Fehler-Betriebszustand F-BZ einnehmen und zusätzlich eine entsprechende Fehlermeldung generieren. Diese Fehlermeldung wird beispielsweise über eine Anzeigeeinheit AE der Nutzerschnittstelle der Batterieladeeinheit BLE einem Nutzer der Batterieladeanlage BLA angezeigt. Bei einer möglichen Ausführungsform kann jede Batterieladeeinheit BLE der Batterieladeanlage BLA ihren jeweiligen momentanen Status und/oder ihre Konfigurationsdaten KDAT bei Auftreten eines Ereignisses über die interne Kommunikationsverbindung KV der Batterieladeanlage BLA an die übrigen Batterieladeeinheiten BLE der Batterieladeanlage BLA übertragen. Das Ereignis kann beispielsweise im Erkennen eines Fehler-Status einer anderen Batterieladeeinheit BLE der Batterieladeanlage BLA bestehen. Bei einer alternativen Ausführungsform werden die Konfigurationsdaten KDAT und die momentanen Statusinformationen jeder Batterieladeeinheit BLE in regelmäßigen Zeitabständen über die Kommunikationsverbindung KV der Batterieladeanlage BLA an die übrigen Batterieladeeinheiten BLE der Batterieladeanlage BLA übertragen. Beispielsweise erfolgt ein Austausch der Konfigurationsdaten KDAT sowie der Statusinformationen der Batterieladeeinheiten BLE jede Sekunde oder jede Minute oder in Echtzeit bzw. kontinuierlich.

Bei einer möglichen Ausführungsform der erfindungsgemäßen Batterieladeanlage BLA verfügt jedes Batterieladegerät BLG der Batterieladeeinheit BLE über einen integrierten Controller (nicht gezeigt), der über die interne Kommunikationsverbindung KV, beispielsweise einen Datenbus, mit den Controllern der übrigen Batterieladegeräte BLG der Batterieladeanlage BLA verbunden ist. Die Kommunikationsverbindung KV kann beispielsweise einen seriellen oder parallelen Datenbus umfassen. Über diesen Datenbus werden einerseits der jeweilige momentane Status der entsprechenden Batterieladeeinheiten BLE übertragen und andererseits bei Bedarf zusätzlich Konfigurationsdaten KDAT hinsichtlich der Konfiguration der betreffenden Batterieladeeinheit BLE. Bei einer weiteren möglichen Ausführungsform ist die Kommunikationsverbindung KV der Batterieladeanlage BLA mit einem Gateway der Batterieladeanlage BLA verbunden. Dieses Gateway bildet bei einer möglichen Ausführungsform einen Zugangspunkt zu einem Datennetzwerk, beispielsweise dem Internet. Bei einer möglichen Ausführungsform werden die Statusinformationen hinsichtlich des momentanen Status der verschiedenen Batterieladeeinheiten BLE der Batterieladeanlage BLA über das Gateway an einen entfernten Server übertragen.

Andere Ausführungsformen der erfindungsgemäßen Batterieladeanlage BLA sind möglich. Bei einer möglichen Ausführungsform verfügt jede Batterieladeeinheit BLE der Batterieladeanlage BLA neben dem DC-Ladestecker DC-LS zusätzlich über eine Anschlusserkennungseinheit, welche den Anschluss einer Traktionsbatterie BAT an den DC-Ladestecker DC-LS der Batterieladeeinheit BLE erkennt und über die Kommunikationsverbindung KV der Batterieladeanlage BLA an den Controller des entsprechenden Batterieladegerätes BLG sowie an die Controller der übrigen Batterieladegeräte BLG meldet.

Bei einer weiteren möglichen Ausführungsform weist die Batterieladeeinheit BLE der Batterieladeanlage BLA zusätzlich jeweils eine Leseeinheit auf. Diese Leseeinheit kann zum Auslesen von Daten aus einem lokalen Datenspeicher einer über den zugehörigen DC-Ladestecker DC-LS der Batterieladeeinheit BLE angeschlossenen Traktionsbatterie BAT vorgesehen sein. Diese Daten geben beispielweise einen Typ oder Betriebsparameter der angeschlossenen Traktionsbatterie BAT an und können bei Durchführung des Aufladevorganges durch den Controller des Batterieladegerätes BLG der Batterieladeeinheit BLE berücksichtigt werden.

Bei einer weiteren möglichen Ausführungsform weist die Batterieladeeinheit BLE der Batterieladeanlage BLA jeweils zusätzlich eine Schreibeinheit zum Einschreiben von Daten in einen lokalen Datenspeicher einer über den zugehörigen DC-Ladestecker DC-LS der Batterieladeeinheit BLE angeschlossenen Traktionsbatterie BAT auf. Beispielsweise kann der Controller des Batterieladegerätes BLG der Batterieladeeinheit BLE über die Schreibeinheit Daten hinsichtlich des erfolgten Aufladevorganges in einen lokalen Datenspeicher der Traktionsbatterie BAT des austauschbaren Batteriesystems BSYS einschreiben. Beispielsweise kann in den lokalen Datenspeicher der Traktionsbatterie BAT seitens des Controllers des Batterieladegerätes BLG eingeschrieben werden, an welcher Batterieladeanlage BLA die Traktionsbatterie BAT des austauschbaren Batteriesystems BSYS aufgeladen wurde.

Bei einer möglichen Ausführungsform ist die Leseeinheit und die Schreibeinheit der Batterieladeeinheit BLE in den DC-Ladestecker DC-LS der Batterieladeeinheit BLE integriert. Ein Auslesen von Daten aus einem lokalen Datenspeicher der Traktionsbatterie BAT sowie ein Einschreiben von Daten in den lokalen Datenspeicher der Traktionsbatterie BAT erfolgt bei einer möglichen Ausführungsform drahtlos, beispielsweise mittels NFC-Verbindung.

Die Aufladeverriegelung der Aufladevorgänge innerhalb des Aufladeverfahrens AV mithilfe der Kommunikationsverbindung KV kann bei einer möglichen Ausführungsform über eine Nutzerschnittstelle der Batterieladeanlage BLA aktiviert bzw. deaktiviert werden. Bei einer möglichen Ausführungsform ist eine Deaktivierung der Ladeverriegelungsfunktion nur durch eine hierzu berechtigte Person bzw. einem hierzu berechtigten Nutzer möglich. Bei einer möglichen Ausführungsform der erfindungsgemäßen Batterieladeanlage BLA wird ein Nutzer der Batterieladeanlage BLA über die Nutzerschnittstelle der Batterieladeanlage BLA authentifiziert. Ein entsprechend authentifizierter und autorisierter Nutzer kann bei einer möglichen Ausführungsform die Ladeverriegelungsfunktion an der Batterieladeanlage BLA aktivieren bzw. deaktivieren.

Bei Ausführung des Aufladeverfahrens AV an Batterien BAT eines austauschbaren Batteriesystems BSYS befinden sich die Batterieladeeinheiten BLE bzw. die darin befindlichen Batterieladegeräte BLG zunächst in dem Leerlauf-Betriebszustand LL-BZ der Batterieladeanlage BLA und nehmen den Status "ladebereit" (Lber) ein, wobei sie auf den Anschluss einer entsprechenden Batterie BAT über den DC-Ladestecker DC-LS der betreffenden Batterieladeeinheit BLE warten. Wenn beide DC-Ladestecker DC-LS1, DC-LS2 an eine entsprechende Batterie BAT1, BAT2 angeschlossen sind, nehmen beide Batterieladeeinheiten BLE den Status "Batterie angesteckt" (BATang) ein. Dies triggert einen automatischen Wechsel bzw. Betriebszustandsübergang aus dem Leerlaufbetriebszustand LL-BZ der Batterieladeanlage BLA in den Auflade-Betriebszustand AL-BZ, um die entsprechenden Traktionsbatterien BAT in zwei separaten Aufladevorgängen des Aufladeverfahrens AV durch entsprechende Batterieladeeinheiten BLE1, BLE2 aufzuladen. Eine Batterieladeeinheit BLE wartet also stets bzw. bevorzugt auf die andere Batterieladeeinheit BLE und der Ladevorgang zum Laden der Batterien BAT1, BAT2 des Batteriesystems BSYS erfolgt entsprechend verriegelt. Der Ladevorgang zum Laden des Batteriesystems BSYS umfasst getrennte Aufladevorgänge zum jeweiligen Aufladen der in dem Batteriesystem BSYS enthaltenen Batterien BAT1, BAT2, wobei die Aufladevorgänge der Batterien BAT1, BAT2 durch den in Fig.3 schematisch dargestellten Verriegelungsmechanismus verschränkt bzw. verriegelt ausgeführt werden. Die Aufladevorgänge an den Batterien BAT1, BAT2 des Batteriesystems BSYS können daher auch zeitlich unabhängig voneinander bzw. zeitlich versetzt ausgeführt werden. Die Verriegelung erfolgt mittels der über die Kommunikationsschnittstelle bzw. Kommunikationsverbindung KV übertragenen Daten, insbesondere anhand der Statusinformation, welche den momentanen Status der Batterieladeinheiten BLE angeben. Wird der Aufladevvorgang an einer der beiden Batterieladeeinheiten BLE beispielsweise über eine Nutzerschnittstelle durch einen Nutzer durch Drücken eines entsprechenden Bedienknopfes unterbrochen, ändert die entsprechende Batterieladeeinheit BLE ihren Status.

Nach Beendigung des jeweiligen Aufladevorganges, beispielsweise nach Durchführung eines entsprechenden Ladeprogramms durch die Batterieladegeräte BLG, nehmen die Batterieladeeinheiten BLE den Status "Laden beendet" (Lb) ein und die Batterieladeanlage BLA geht von dem Auflade-Betriebszustand AL-BZ in den Ladeende-Betriebszustand LE-BZ über, wie in Fig. 3 schematisch dargestellt. Über die Kommunikationsverbindung KV kann dabei noch ausgetauscht werden, ob bereits beide Ausgabeeinheiten AE1, AE2 der Batterieladeeinheiten BLE1,BLE2 das Ladeende anzeigen dürfen.

Auf diese Weise kann sichergestellt werden, dass beide Batterien BAT des austauschbaren Batteriesystems BSYS nach Beendigung des Ladevorganges den gleichen Ladezustand SoC aufweisen und nach Anschluss an das Elektrofahrzeug EF keine nennenswerten bzw. gefährlichen Ausgleichsströme auftreten.

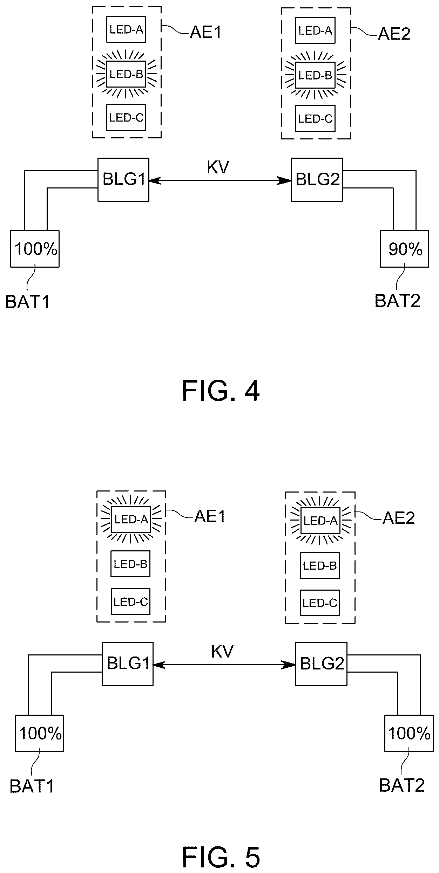

Die Aufladeverriegelung der Aufladevorgänge des Aufladeverfahrens AV zum Aufladen von Batterien BAT1, BAT2 eines Batteriesystems BSYS ist in den Fig. 4 und 5 beispielhaft für den Fall dargestellt, dass die separaten bzw. unabhängigen Aufladevorgänge zum Aufladen der beiden Batterien BAT1, BAT2 des Batteriesystems BSYS während des Ladens des Batteriesystems BSYS nicht gleichzeitig beendet werden .

Fig. 4 zeigt die Situation, dass die erste Batterie BAT 1 bereits vollständig geladen ist(SoC1=100%) - Status "Laden beendet" (Lb), wohingegen die zweite Batterie BAT 2 noch nicht vollständig geladen ist (SoC2=90%) - Status "Batterie laden"(BATaufl). Die Übertragung der Statusinformationen über die Kommunikationsverbindung KV resultiert darin, dass die jeweilige Ausgabeeinheiten AE1, AE2 der Batterieladeeinheiten BLE1,BLE2 anzeigen, dass noch nicht alle Aufladevorgänge, die durch die verschiedenen Batterieladegeräte BLG1, BLG2 der Batterieladeinheiten BLE1,BLE2 der Batterieladeanlage BLA zum Aufladen aller Batterien BAT1,BAT2 des Batteriesystems BSYS vorgenommen werden, abgeschlossen sind. Beispielsweise leuchtet jeweils eine orange LED-B in der Mitte von drei Anzeigeelementen LED-A, LED-B, LED-C der beiden Ausgabeeinheiten AE1, AE2,der Batterieladeeinheiten BLE1,BLE2, welche den momentanen Status "Batterie Laden" (BATaufl)der entsprechenden Batterieladeinheit BLE anzeigt. Es kann auch der Auflade-Betriebszustand AL-BZ der gesamten Batterieladeanlage BLA optisch angezeigt werden. Somit kommt der Nutzer nicht in Versuchung, die beiden Batterien BAT1, BAT2 des Batteriesystems BSY mit unterschiedlichen Ladezuständen SoCl, SoC2 in das Elektrofahrzeug EF einzubauen, wodurch möglicherweise zu hohe Ausgleichsströme verursacht werden.

Fig. 5 zeigt die Situation, dass zu einem späteren Zeitpunkt beide Batterien BAT1, BAT2 des Batteriesystems BSYS vollständig geladen sind (SoC1=100%; SoC2=100%). Die Übertragung der Statusinformationen über die Kommunikationsverbindung KV resultiert darin, dass die beiden Ausgabeeinheiten AE1, AE2 der Batterieladeeinheiten BLE1,BLE2 der Batterieladeanlage BLA dem Nutzer anzeigen, dass die Aufladevorgänge an beiden Batterien BAT1,BAT2 abgeschlossen sind. Beispielsweise leuchtet jeweils eine grüne LED-A der drei Anzeigeelemente LED-A, LED-B,LED-C der beiden Ausgabeeinheiten AE1,AE2, welche den Status "Laden beendet" (Lb) anzeigt. Daraufhin kann der Nutzer das Batteriesystem BSYS mit den beiden darin enthaltenen - vollständig aufgeladenen - Batterien BAT1, BAT2 in das Elektrofahrzeug EF einbauen. Aufgrund der vollständigen Aufladung der beiden Batterien BAT1, BAT2 und somit gleichen Ladezustände (SoC1=SoC2=100%) kommt es nach Einbau des Batteriesystems BSYS zu keinen für den Nutzer oder eine sonstige Person gefährlichen Ausgleichsströmen. Das dritte Anzeigeelement LED-C der beiden Anzeigeeinheiten AE1, AE2 ist für den Status "Fehler" vorgesehen und leuchtet demnach bei Auftreten eines Fehlers bevorzugt rot.

Die verschiedenen Statusinformationen hinsichtlich eines momentanen bzw. aktuellen Status einer Batterieladeeinheit BLE können beispielsweise mithilfe von LEDs über eine Nutzerschnittstelle der betreffenden Batterieladeeinheit BLE einem Nutzer der Batterieladeanlage BLA angezeigt werden. Beispielsweise wird die Beendigung des entsprechenden Aufladevorganges durch eine grünleuchtende LED dem Nutzer angezeigt. Sobald in dem Aufladeverfahren AV der gesamte Ladevorgang des austauschbaren Batterieladesystems BSYS, welcher die unabhängigen Aufladevorgänge der darin enthaltenen Batterien BAT umfasst, abgeschlossen ist, kann das Batteriesystem BSYS von den Ladesteckern DC-LS der Batterieladeanlage BLA entfernt werden und bei Bedarf an entsprechende Kabelstecker EF-KS des Elektrofahrzeuges EF angeschlossen werden.

Die erfindungsgemäße Batterieladeanlage BLA verfügt über mehrere Batterieladeeinheiten BLE, die ihrerseits jeweils ein Batterieladegerät BLG, einen AC-Stecker AC-S und einen DC-Ladestecker DC-LS umfassen. Für jedes Batterieladegerät BLG der Batterieladeeinheit BLE ist vorzugsweise ein Controller vorgesehen, welcher über eine Kommunikationsverbindung KV mit den Controllern der übrigen Batterieladegeräte BLG der Batterieladeanlage BLA verbunden ist. Bei einer möglichen Ausführungsform der erfindungsgemäßen Batterieladeanlage BLA können verschiedenartige Fehler-status mit zugehörigen Fehlermeldungen auftreten. Beispielsweise besteht ein erster Fehlerstatus eine Batterieladeeinheit BLE darin, dass die betreffende Batterieladeeinheit BLE keine Kommunikationsverbindung KV zu einer anderen Batterieladeeinheit BLE der Batterieladeanlage BLA aufweist. Ein Fehler-Betriebszustand der Batterieladeanlage BLA kann darin bestehen, dass zwar eine Kommunikationsverbindung KV zwischen den verschiedenen Batterieladeeinheiten BLE besteht, jedoch eine der Batterieladeeinheiten BLE ihrerseits einen Fehler-Status anzeigt. Ein weiterer Fehler-Betriebszustand kann beispielsweise darin bestehen, dass die Hardware- und/oder Softwarekonfiguration der Batterieladegeräte BLG1, BLG2 der Batterieladeeinheiten BLE1, BLE2 unterschiedlich ist oder die verschiedenen Batterieladegeräte BLG1, BLG2 der Batterieladeeinheiten BLE1, BLE2 ein unterschiedliches Lade- oder Kommunikationsprotokoll verwenden. Sind beispielsweise die Batterieladegeräte BLG1, BLG2 inkompatibel, kann dies als Fehler-Betriebszustand der Batterieladeanlage BLA angezeigt werden.

Verfügt die Batterieladeeinheit BLE über eine entsprechende Leseeinheit zum Auslesen von Konfigurationsdaten KDAT aus einem lokalen Datenspeicher einer Traktionsbatterie BAT innerhalb des austauschbaren Batteriesystems BSYS, kann zudem die Kompatibilität der verschiedenen Traktionsbatterien BAT innerhalb des austauschbaren Batteriesystems BSYS zueinander oder gegenüber den vorgesehenen Batterieladegeräten BLG1, BLG2 der Batterieladeeinheiten BLE überprüft werden. Sind beispielsweise die Batterieladegeräte BLG1, BLG2 nicht kompatibel mit den Traktionsbatterien BAT1, BAT2 des austauschbaren Batteriesystems BSYS, kann dies als eigenständiger Fehler-Betriebszustand der Batterieladeanlage BLA angezeigt werden. Beispielsweise wird dem Nutzer der Batterieladeanlage BLA angezeigt, dass die Traktionsbatterien BAT1, BAT2 des aufzuladenden Batteriesystems BSYS nicht kompatibel zu den Batterieladegeräten BLG1, BLG2 der Batterieladeanlage BLA sind. Weiterhin kann bei einer möglichen Ausführungsform über eine Nutzerschnittstelle der Batterieladeanlage BLA auch angezeigt werden, dass die verschiedenen Traktionsbatterien BAT1, BAT2 des angeschlossenen austauschbaren Batteriesystems BSYS zueinander inkompatibel sind, sodass es nach Aufladen durch die Batterieladeanlage BLA zu Ausgleichsströmen kommen kann.

Bei einer möglichen Ausführungsform des austauschbaren Batteriesystems BSYS sind die verschiedenen Traktionsbatterien BAT1, BAT2 innerhalb des Batteriesystems BSYS fest integriert. Bei einer alternativen Ausführungsform können die Traktionsbatterien BAT innerhalb des austauschbaren Batteriesystems BSYS ihrerseits ausgewechselt werden, insbesondere wenn eine Traktionsbatterie BAT defekt ist. Falls es beim Austausch einer defekten Traktionsbatterie BAT zu einer Verwechslung kommt, kann dies bei einer möglichen Ausführungsform durch die erfindungsgemäße Batterieladeanlage BLA durch Auswertung von über die Kommunikationsverbindung KV ausgetauschten Daten erkannt werden und ein Aufladen der zueinander inkompatiblen Traktionsbatterien BAT verhindert werden.

### Bezugzeichenliste:

- AC-S: AC Stecker
- AE: Ausgabeeinheit
- AV: Aufladeverfahren
- BZ: Betriebszustand
- BAT: Batterie
- BAT-LK: Batterieladekupplung
- BLA: Batterieladanlage
- BLG: Batterieladegerät
- BSYS: Batteriesystem
- DC-LS: DC Ladestecker
- EE: Eingabeeinheit
- EF: Elektrofahrzeug
- EF-KS: Elektrofahrzeug-Kabelstecker
- EM: Elektromotor
- F: Fehler
- F-BZ: Fehler-Betriebszustand
- KV: Kommunikationsverbindung
- LL-BZ: Leerlauf-Betriebszustand
- AL-BZ: Auflade-Betriebszustand
- LE-BZ: Ladeende-Betriebszustand
- LU-BZ: Ladeunterbrechung-Betriebszustand
- ÜSE: Überstromsicherung

## Patentansprüche

1. Batterieladeanlage (BLA) zum Laden eines austauschbaren Batteriesystems (BSYS), das zum Antrieb eines Elektromotors (EM) vorgesehen ist, wobei das austauschbare Batteriesystem (BSYS) mehrere integrierte Traktionsbatterien (BAT1, BAT2) umfasst, die in einem eingebauten Zustand des Batteriesystems (BSYS) gemeinsam den Elektromotor (EM) eines Elektrofahrzeugs (EF) mit Strom versorgen, aufweisend:
mehrere Batterieladeeinheiten (BLE), wobei für jede der mehreren in dem austauschbaren Batteriesystem (BSYS) integrierte Traktionsbatterien (BAT1, BAT2) eine Batterieladeeinheit (BLE1, BLE2) vorgesehen ist, wobei die Batterieladeanlage (BLA) für jede in dem austauschbaren Batteriesystem (BSYS) integrierte Traktionsbatterie (BAT1, BAT2) einen DC-Ladestecker (DC-LS1, DC-LS2) aufweist, der mit einem zugehörigen Batterieladegerät (BLG1, BLG2) einer Batterieladeeinheit (BLE1, BLE2) der Batterieladeanlage (BLA) verbunden ist,
wobei jede der Batterieladeeinheiten (BLE1, BLE2) einen von mehreren möglichen Status einnimmt,
wobei die Batterieladeeinheiten (BLE1, BLE2) über eine Kommunikationsverbindung (KV) der Batterieladeanlage (BLA) ihren jeweiligen Status miteinander austauschen, um Betriebszustandsübergänge zwischen Betriebszuständen (BZ) der Batterieladeanlage (BLA) zu verriegeln und Aufladevorgänge der über die DC-Ladestecker (DC-LS1, DC-LS2) an die Batterieladeanlage (BLA) angeschlossenen Traktionsbatterien (BAT1, BAT2) des austauschbaren Batteriesystem (BSYS) abzustimmen, und
wobei während eines Aufladeverfahrens (AV) zum Laden des austauschbaren Batteriesystems (BSYS) mit den mehreren integrierten Traktionsbatterien (BAT1, BAT2) die Batterieladeanlage (BLA) einen von mehreren vorgegebenen Betriebszuständen (BZ) einnimmt und Betriebszustandsübergänge zwischen den Betriebszuständen (BZ) der Batterieladeanlage (BLA) an die von allen Batterieladeeinheiten (BLE1, BLE2) mitgeteilten Status geknüpft sind.

2. Batterieladeanlage nach Anspruch 1,
wobei die Betriebszustandsübergänge zwischen den Betriebszuständen (BZ) der Batterieladeanlage (BLA) derart an die von allen Batterieladeeinheiten (BLE1, BLE2) mitgeteilten Status geknüpft sind, dass ein Betriebszustandsübergang zu einem Ladeende-Betriebszustand (LE-BZ) nur dann erfolgt, wenn alle Batterieladeeinheiten einen Status "Laden beendet" (Lb) einnehmen.

3. Batterieladeanlage nach Anspruch 2, wobei
die Betriebszustandsübergänge zwischen den Betriebszuständen (BZ) der Batterieladeanlage (BLA) derart an die von allen Batterieladeeinheiten (BLE) mitgeteilten Status geknüpft sind, dass ein Betriebszustandsübergang zu einem anderen Betriebszustand als dem Ladeende-Betriebszustand (LE-BZ) erfolgt, falls während eines Auflade-Betriebszustands (AL-BZ) der Batterieladeanlage (BLA) nicht alle Batterieladeeinheiten (BLE) den Status "Laden beendet" (Lb) mitteilen oder einnehmen.

4. Batterieladeanlage nach einem der voranstehenden Ansprüche,
wobei die Batterieladeanlage(BLA) bei Unterbrechung der Kommunikationsverbindung (KV) zwischen den Batterieladeeinheiten (BLE1, BLE2) der Batterieladeanlage (BLA) jeweils einen Fehler-Betriebszustand (F-BZ) einnimmt und eine entsprechende Fehlermeldung erzeugt, welche die erfolgte Kommunikationsverbindungsunterbrechung angibt.

5. Batterieladeanlage nach einem der voranstehenden Ansprüche,
wobei die Batterieladeeinheiten (BLE1, BLE2) der Batterieladeanlage (BLA) über die Kommunikationsverbindung (KV) Konfigurationsdaten (KDAT) übertragen, welche eine Hardware- und/oder eine Softwarekonfiguration der jeweiligen Batterieladeeinheiten (BLE1, BLE2) angeben.

6. Batterieladeanlage nach Anspruch 5,
wobei jede Batterieladeeinheit (BLE) der Batterieladeanlage (BLA) ihre eigene Hardware- und/oder Softwarekonfiguration anhand der über die Kommunikationsverbindung (KV) empfangenen Konfigurationsdaten (KDAT) mit der Hardware- und/oder Softwarekonfiguration der mindestens einen übrigen Batterieladeeinheit (BLE1, BLE2) der Batterieladeanlage (BLA) vergleicht und die Batterieladeanlage (BLA) bei Bestehen einer signifikanten Konfigurationsabweichung einen entsprechenden Fehler-Betriebszustand einnimmt und eine entsprechende Fehlermeldung erzeugt.

7. Batterieladeanlage nach Anspruch 5 oder 6,
wobei jede Batterieladeeinheit (BLE1, BLE2) der Batterieladeanlage (BLA) ihren jeweiligen momentanen Status und/oder ihre Konfigurationsdaten (KDAT) bei Auftreten eines Ereignisses oder in regelmäßigen Zeitabständen über die Kommunikationsverbindung (KV) der Batterieladeanlage (BLA) an die übrigen Batterieladeeinheiten (BLE1, BLE2) der Batterieladeanlage (BLA) überträgt.

8. Batterieladeanlage nach einem der voranstehenden Ansprüche,
wobei jede Batterieladeeinheit (BLE1, BLE2) der Batterieladeanlage (BLA) eine Nutzerschnittstelle mit einer Eingabeeinheit (EE) zur Änderung eines Status der Batterieladeeinheit (BLE1, BLE2) und/oder zur Änderung eines Betriebszustandes (BZ)der Batterieladeanlage (BLA) und/oder eine Ausgabeeinheit (AE) zur Anzeige des Status der Batterieladeeinheit (BLE1, BLE2) und/oder zur Anzeige des Betriebszustandes der Batterieladeanlage (BLA) aufweist.

9. Batterieladeanlage nach einem der voranstehenden Ansprüche,
wobei die Kommunikationsverbindung (KV) der Batterieladeanlage (BLA) über ein Gateway der Batterieladeanlage (BLA) mit dem Internet verbunden ist; und/oder
wobei die über die Kommunikationsverbindung (KV) der Batterieladeanlage (BLA) übertragene Status der Batterieladeeinheiten (BLE1, BLE2) in einem lokalen Speicher der Batterieladeanlage (BLA) oder einer entfernten Datenbank gespeichert werden.

10. Batterieladeanlage nach einem der voranstehenden Ansprüche,
wobei die Batterieladeeinheiten (BLE1, BLE2) der Batterieladeanlage (BLA) jeweils eine Anschlusserkennungseinheit zur Erkennung eines elektrischen Anschlusses einer Traktionsbatterie (BAT1, BAT2) an einen zugehörigen DC-Ladestecker (DC-LS1, DC-LS2) der Batterieladeeinheit (BLE1, BLE2) aufweisen.

11. Verfahren zum Aufladen von mehreren Traktionsbatterien (BAT1, BAT2) eines austauschbaren Batteriesystems (BSYS), das zum Antrieb eines Elektromotors (EM) verwendet wird, wobei das austauschbare Batteriesystem (BSYS) mehrere integrierte Traktionsbatterien (BAT1, BAT2) umfasst, die in einem eingebauten Zustand des austauschbaren Batteriesystems (BSYS) gemeinsam den Elektromotor (EM) eines Elektrofahrzeugs (EF) mit Strom versorgen, umfassend:
Laden der in dem austauschbaren Batteriesystem (BSYS) integrierten Traktionsbatterien (BAT) in einem Aufladeverfahren (AV) durch jeweils separate Batterieladeeinheiten (BLE) einer Batterieladeanlage (BLA);
Austauschen eines jeweiligen Status der Batterieladeeinheiten (BLE1, BLE2) zwischen den Batterieladeeinheiten (BLE) der Batterieladeanlage (BLA) während des Aufladeverfahrens (AV) über eine Kommunikationsverbindung (KV) der Batterieladeanlage (BLA), um Betriebszustandsübergänge zwischen Betriebszuständen (BZ) der Batterieladeanlage (BLA) zu verriegeln und Aufladevorgänge der über die DC-Ladestecker (DC-LS1, DC-LS2) an die Batterieladeanlage (BLA) angeschlossenen Traktionsbatterien (BAT1, BAT2) des austauschbaren Batteriesystem (BSYS) abzustimmen; und
Ausführen eines Betriebszustandsübergangs zwischen Betriebszuständen (BZ) der Batterieladeanlage (BLA) während des Aufladeverfahrens (AV) zum Laden des austauschbaren Batteriesystems (BSYS) mit den mehreren integrierten Traktionsbatterien (BAT1, BAT2) geknüpft an die von allen Batterieladeeinheiten (BLE) mitgeteilten Status.

12. Verfahren nach Anspruch 11,
wobei die Batterieladeeinheiten (BLE1, BLE2) der Batterielade-anlage (BLA) jeweils eine Nutzerschnittstelle mit einer Eingabeeinheit (EE) zur Änderung eines Status der Batterieladeeinheit (BLE1, BLE2) und/oder zur Änderung eines Betriebszustandes (BZ)der Batterieladeanlage (BLA) und/oder mit einer Ausgabeeinheit (AE) aufweist, die den Status der Batterieladeeinheit (BLE1, BLE2) und/oder den Betriebszustand der Batterieladeanlage (BLA) anzeigt.

13. Verfahren nach einem der Ansprüche 11 oder 12, wobei die Batterieladeanlage(BLA) bei Unterbrechung der Kommunikationsverbindung (KV) zwischen den Batterieladeeinheiten (BLE1, BLE2) der Batterieladeanlage (BLA) jeweils einen Fehler-Betriebszustand (F-BZ) einnimmt und eine entsprechende Fehlermeldung erzeugt, welche die erfolgte Kommunikationsverbindungsunterbrechung angibt.

14. Verfahren nach einem der Ansprüche 11 bis 13,
wobei das Ausführen eines Betriebszustandsübergangs das Wechseln des Betriebszustands (BZ) der Batterieladeanlage (BLA) zu einem Ladeende-Betriebszustand (LE-BZ) umfasst und der Wechsel zu dem Ladeende-Betriebszustand (LE-BZ) nur dann erfolgt, wenn alle Batterieladeeinheiten einen Status "Laden beendet" (Lb) einnehmen.

15. Verfahren nach Anspruch 14,
wobei das Ausführen eines Betriebszustandsübergangs das Wechseln des Betriebszustands (BZ) der Batterieladeanlage (BA) zu einem anderen Betriebszustand (BZ) als dem Ladeende-Betriebszustand (LE-BZ) umfasst, sobald während des Auflade-Betriebszustand (AL-BZ) der Batterieladeanlage (BLA) nicht alle Batterieladeeinheiten (BLE1, BLE2) den Status "Laden beendet" (Lb) mitteilen oder einnehmen.

## Claims

1. A battery charging system (BLA) for charging a exchangeable battery system (BSYS), which is provided for driving an electric motor (EM), the exchangeable battery system (BSYS) comprising a plurality of integrated traction batteries (BAT1, BAT2), which, in an installed state of the battery system (BSYS), jointly supply the electric motor (EM) of an electric vehicle (EF) with electric power, comprising
a plurality of battery charging units (BLE), wherein a battery charging unit (BLEI, BLE2) is provided for each of the plurality of traction batteries (BAT1, BAT2) integrated in the exchangeable battery system (BSYS), wherein the battery charging system (BLA) has a DC charging plug (DC-LS1, DC-LS2) for each traction battery (BAT1, BAT2) integrated in the exchangeable battery system (BSYS), which is connected to an associated battery charger (BLG1, BLG2) of a battery charging unit (BLEI, BLE2) of the battery charging system (BLA),
wherein each of the battery charging units (BLEI, BLE2) assumes one of several possible statuses,
wherein the battery charging units (BLEI, BLE2) exchange their respective status with each other via a communication link (KV) of the battery charging system (BLA), in order to interlock operating state transitions between operating states (BZ) of the battery charging system (BLA) and to synchronize charging processes of the traction batteries (BAT1, BAT2) of the exchangeable battery system (BSYS) connected to the battery charging system (BLA) via the DC charging plugs (DC-LS1, DC-LS2), and
wherein during a charging process (AV) for charging the exchangeable battery system (BSYS) with the several integrated traction batteries (BAT1, BAT2), the battery charging system (BLA) assumes one of several predetermined operating states (BZ) and operating state transitions between the operating states (BZ) of the battery charging system (BLA) are linked to the statuses communicated by all the battery charging units (BLEI, BLE2).

2. The battery charging system according to claim 1,
wherein the operating state transitions between the operating states (BZ) of the battery charging system (BLA) are linked to the statuses communicated by all the battery charging units (BLEI, BLE2) in such a way that an operating state transition to an end-of-charging operating state (LE-BZ) only takes place when all battery charging units assume a status "charging complete" (Lb).

3. The battery charging system according to claim 2,
wherein the operating state transitions between the operating states (BZ) of the battery charging system (BLA) are linked to the statuses communicated by all battery charging units (BLE) in such a way that an operating state transition to an operating state other than the end-of-charging operating state (LE-BZ) takes place if, during a charging operating state (AL-BZ) of the battery charging system (BLA), not all the battery charging units (BLE) communicate or assume the status "charging completed" (Lb).

4. The battery charging system according to one of the preceding claims,
wherein the battery charging system (BLA) assumes an error operating state (F-BZ) when an interruption of the communication link (KV) between the battery charging units (BLEI, BLE2) of the battery charging system (BLA) occurs and generates a corresponding error message indicating the interruption of the communication connection that has occurred.

5. The battery charging system according to one of the preceding claims,
wherein the battery charging units (BLEI, BLE2) of the battery charging system (BLA) transmit configuration data (KDAT) via the communication link (KV), which specify a hardware and/or a software configuration of the respective battery charging units (BLEI, BLE2).

6. The battery charging system according to claim 5,
wherein each battery charging unit (BLE) of the battery charging system (BLA) compares its own hardware and/or software configuration with the hardware and/or software configuration of the at least one other battery charging unit (BLEI, BLE2) of the battery charging system (BLA) using the configuration data (KDAT) received via the communication link (KV) and the battery charging system (BLA) assumes a corresponding error operating state if there is a significant configuration deviation and generates a corresponding error message.

7. The battery charging system according to claim 5 or 6,
wherein each battery charging unit (BLEI, BLE2) of the battery charging system (BLA) transmits its respective current status and/or its configuration data (KDAT) to the other battery charging units (BLEI, BLE2) of the battery charging system (BLA) when an event occurs or at regular intervals via the communication link (KV) of the battery charging system (BLA).

8. The battery charging system according to one of the preceding claims,
wherein each battery charging unit (BLEI, BLE2) of the battery charging system (BLA) has a user interface with an input unit (EE) for changing a status of the battery charging unit (BLEI, BLE2) and/or for changing an operating state (BZ) of the battery charging system (BLA) and/or has an output unit (AE) for displaying the status of the battery charging unit (BLEI, BLE2) and/or for displaying the operating state of the battery charging system (BLA).

9. The battery charging system according to one of the preceding claims,
wherein the communication link (KV) of the battery charging system (BLA) is connected to the Internet via a gateway of the battery charging system (BLA); and/or wherein the statuses of the battery charging units (BLEI, BLE2) transmitted via the communication link (KV) of the battery charging system (BLA) are stored in a local memory of the battery charging system (BLA) or a remote database.

10. The battery charging system according to one of the preceding claims,
wherein the battery charging units (BLEI, BLE2) of the battery charging system (BLA) each have a connection recognition unit for recognizing an electrical connection of a traction battery (BAT1, BAT2) to an associated DC charging plug (DC-LS1, DC-LS2) of the battery charging unit (BLEI, BLE2).

11. A method for charging a plurality of traction batteries (BAT1, BAT2) of an exchangeable battery system (BSYS) used to drive an electric motor (EM),
wherein the exchangeable battery system (BSYS) comprises a plurality of integrated traction batteries (BAT1, BAT2) which, in an installed state of the exchangeable battery system (BSYS), jointly supply the electric motor (EM) of an electric vehicle (EF) with electric power, comprising:
Charging of the traction batteries (BAT) integrated in the exchangeable battery system (BSYS) in a charging process (AV) using separate battery charging units (BLE) of a battery charging system (BLA);
Exchange of a respective status of the battery charging units (BLEI, BLE2) between the battery charging units (BLE) of the battery charging system (BLA) during the charging process (AV) via a communication link (KV) of the battery charging system (BLA), to interlock operating state transitions between operating states (BZ) of the battery charging system (BLA) and to synchronize charging processes of the traction batteries (BAT1, BAT2) of the exchangeable battery system (BSYS) connected to the battery charging system (BLA) via the DC charging plugs (DC-LS1, DC-LS2); and
Execution of an operating state transition between operating states (BZ) of the battery charging system (BLA) during the charging procedure (AV) for charging the exchangeable battery system (BSYS) with the several integrated traction batteries (BAT1, BAT2) linked to the statuses communicated by all the battery charging units (BLE).

12. The method according to claim 11,
wherein the battery charging units (BLEI, BLE2) of the battery charging system (BLA) each have a user interface with an input unit (EE) for changing a status of the battery charging unit (BLEI, BLE2) and/or for changing an operating state (BZ) of the battery charging system (BLA) and/or with an output unit (AE) which displays the status of the battery charging unit (BLEI, BLE2) and/or the operating state of the battery charging system (BLA).

13. The method according to any one of claims 11 or 12,
wherein the battery charging system (BLA) assumes an error operating state (F-BZ) when an interruption of the communication link (KV) between the battery charging units (BLEI, BLE2) of the battery charging system (BLA) occurs and generates a corresponding error message indicating the interruption of the communication connection that has occurred.

14. The method according to any one of claims 11 to 13,
wherein the execution of an operating state transition comprises the change of the operating state (BZ) of the battery charging system (BLA) to an end-of-charging operating state (LE-BZ) and the change to the end-of-charging operating state (LE-BZ) only takes place when all battery charging units assume a status "charging completed" (Lb).

15. The method according to claim 14,
wherein the execution of an operating state transition comprises changing the operating state (BZ) of the battery charging system (BA) to an operating state (BZ) other than the end-of-charging operating state (LE-BZ) as soon as not all the battery charging units (BLEI, BLE2) communicate or assume the status "charging completed" (Lb) during the charging operating state (AL-BZ) of the battery charging system (BLA).

## Revendications

1. Installation de charge de batterie (BLA) pour charger un système de batteries interchangeable (BSYS) qui est destiné à entraîner un moteur électrique (EM), dans laquelle le système de batteries interchangeable (BSYS) comprend une pluralité de batteries de traction intégrées (BAT1, BAT2) qui, dans un état monté du système de batteries (BSYS), alimentent conjointement en courant le moteur électrique (EM) d'un véhicule électrique (EF), comportant :
une pluralité d'unités de charge de batterie (BLE), dans laquelle, pour chacune de la pluralité de batteries de traction (BAT1, BAT2) intégrées dans le système de batteries interchangeable (BSYS), une unité de charge de batterie (BLE1, BLE2) est prévue, dans laquelle l'installation de charge de batterie (BLA) comporte, pour chaque batterie de traction (BAT1, BAT2) intégrée dans le système de batteries interchangeable (BSYS), un connecteur de charge en courant continu (DC-LS1, DC-LS2) qui est relié à un chargeur de batterie (BLG1, BLG2) associé d'une unité de charge de batterie (BLE1, BLE2) de l'installation de charge de batterie (BLA),
dans laquelle chacune des unités de charge de batterie (BLE1, BLE2) prend un parmi plusieurs états possibles,
dans laquelle les unités de charge de batterie (BLE1, BLE2) échangent entre elles leur état respectif via une liaison de communication (KV) de l'installation de charge de batterie (BLA) afin de verrouiller des transitions d'état de fonctionnement entre des états de fonctionnement (BZ) de l'installation de charge de batterie (BLA) et de coordonner des opérations de charge des batteries de traction (BAT1, BAT2) du système de batteries interchangeable (BSYS) connectées à l'installation de charge de batterie (BLA) via les connecteurs de charge en courant continu (DC-LS1, DC-LS2), et
dans laquelle, pendant un processus de charge (AV) destiné à charger le système de batteries interchangeable (BSYS) avec la pluralité de batteries de traction intégrées (BAT1, BAT2), l'installation de charge de batterie (BLA) prend un parmi plusieurs états de fonctionnement (BZ) prédéterminés et des transitions d'état de fonctionnement entre les états de fonctionnement (BZ) de l'installation de charge de batterie (BLA) sont liées aux états communiqués par toutes les unités de charge de batterie (BLE1, BLE2).

2. Installation de charge de batterie selon la revendication 1,
dans laquelle les transitions d'état de fonctionnement entre les états de fonctionnement (BZ) de l'installation de charge de batterie (BLA) sont liées aux états communiqués par toutes les unités de charge de batterie (BLE1, BLE2) de telle sorte qu'une transition d'état de fonctionnement vers un état de fonctionnement de fin de charge (LE-BZ) n'a lieu que lorsque toutes les unités de charge de batterie prennent un état "charge terminée" (Lb).

3. Installation de charge de batterie selon la revendication 2, dans laquelle
les transitions d'état de fonctionnement entre les états de fonctionnement (BZ) de l'installation de charge de batterie (BLA) sont liées aux états communiqués par toutes les unités de charge de batterie (BLE) de telle sorte qu'une transition d'état de fonctionnement a lieu vers un état de fonctionnement autre que l'état de fonctionnement de fin de charge (LE-BZ) si, pendant un état de fonctionnement en charge (AL-BZ) de l'installation de charge de batterie (BLA), les unités de charge de batterie (BLE) ne communiquent pas ou ne prennent pas toutes l'état "charge terminée" (Lb).

4. Installation de charge de batterie selon l'une des revendications précédentes,
dans laquelle l'installation de charge de batterie (BLA), en cas de coupure de la liaison de communication (KV) entre les unités de charge de batterie (BLE1, BLE2) de l'installation de charge de batterie (BLA), prend respectivement un état de défaut de fonctionnement (F-BZ) et génère un message de défaut correspondant qui indique la coupure ayant eu lieu de la liaison de communication.

5. Installation de charge de batterie selon l'une des revendications précédentes,
dans laquelle les unités de charge de batterie (BLE1, BLE2) de l'installation de charge de batterie (BLA) transmettent des données de configuration (KDAT) via la liaison de communication (KV), qui indiquent une configuration matérielle et/ou logicielle des unités de charge de batterie (BLE1, BLE2) respectives.

6. Installation de charge de batterie selon la revendication 5,
dans laquelle chaque unité de charge de batterie (BLE) de l'installation de charge de batterie (BLA) compare sa propre configuration matérielle et/ou logicielle au moyen des données de configuration (KDAT) reçues via la liaison de communication (KV), avec la configuration matérielle et/ou logicielle de la au moins une unité de charge de batterie (BLE1, BLE2) restante de l'installation de charge de batterie (BLA) et l'installation de charge de batterie (BLA), en cas d'écart de configuration significatif, prend un état de défaut de fonctionnement correspondant et génère un message de défaut correspondant.

7. Installation de charge de batterie selon la revendication 5 ou 6,
dans laquelle chaque unité de charge de batterie (BLE1, BLE2) de l'installation de charge de batterie (BLA) transmet son état instantané respectif et/ou ses données de configuration (KDAT) respectives en cas d'occurrence d'un événement ou à des intervalles de temps réguliers via la liaison de communication (KV) de l'installation de charge de batterie (BLA), aux unités de charge de batterie (BLE1, BLE2) restantes de l'installation de charge de batterie (BLA).

8. Installation de charge de batterie selon l'une des revendications précédentes,
dans laquelle chaque unité de charge de batterie (BLE1, BLE2) de l'installation de charge de batterie (BLA) comporte une interface utilisateur ayant une unité d'entrée (EE) pour changer un état de l'unité de charge de batterie (BLE1, BLE2) et/ou pour changer un état de fonctionnement (BZ) de l'installation de charge de batterie (BLA) et/ou une unité de sortie (AE) pour afficher l'état de l'unité de charge de batterie (BLE1, BLE2) et/ou pour afficher l'état de fonctionnement de l'installation de charge de batterie (BLA).

9. Installation de charge de batterie selon l'une des revendications précédentes,
dans laquelle la liaison de communication (KV) de l'installation de charge de batterie (BLA) est reliée à l'Internet via une passerelle de l'installation de charge de batterie (BLA) ; et/ou
dans laquelle les états des unités de charge de batterie (BLE1, BLE2) transmis via la liaison de communication (KV) de l'installation de charge de batterie (BLA) sont stockés dans une mémoire locale de l'installation de charge de batterie (BLA) ou dans une base de données distante.

10. Installation de charge de batterie selon l'une des revendications précédentes,
dans laquelle les unités de charge de batterie (BLE1, BLE2) de l'installation de charge de batterie (BLA) comportent respectivement une unité d'identification de connexion pour identifier une connexion électrique d'une batterie de traction (BAT1, BAT2) à un connecteur de charge en courant continu (DC-LS1, DC-LS2) associé de l'unité de charge de batterie (BLE1, BLE2).

11. Procédé de charge de plusieurs batteries de traction (BAT1, BAT2) d'un système de batteries interchangeable (BSYS) qui est utilisé pour l'entraînement d'un moteur électrique (EM), dans lequel le système de batteries interchangeable (BSYS) comprend une pluralité de batteries de traction intégrées (BAT1, BAT2) qui, dans un état monté du système de batteries interchangeable (BSYS), alimentent conjointement en courant le moteur électrique (EM) d'un véhicule électrique (EF), comprenant de :
charger les batteries de traction (BAT) intégrées dans le système de batteries interchangeable (BSYS) dans un processus de charge (AV) par des unités de charge de batterie (BLE) respectivement séparées d'une installation de charge de batteries (BLA) ;
échanger un état respectif des unités de charge de batterie (BLE1, BLE2) entre les unités de charge de batterie (BLE) de l'installation de charge de batterie (BLA) pendant le processus de charge (AV) via une liaison de communication (KV) de l'installation de charge de batterie (BLA) afin de verrouiller des transitions d'état de fonctionnement entre des états de fonctionnement (BZ) de l'installation de charge de batterie (BLA) et de coordonner des opérations de charge des batteries de traction (BAT1, BAT2) du système de batteries interchangeable (BSYS) connectées à l'installation de charge de batterie (BLA) via les connecteurs de charge en courant continu (DC-LS1, DC-LS2) ; et
réaliser une transition d'état de fonctionnement entre des états de fonctionnement (BZ) de l'installation de charge de batterie (BLA) pendant le processus de charge (AV) afin de charger le système de batteries interchangeable (BSYS) avec la pluralité de batteries de traction intégrées (BAT1, BAT2) liées aux états communiqués par toutes les unités de charge de batterie (BLE).

12. Procédé selon la revendication 11,
dans lequel les unités de charge de batterie (BLE1, BLE2) de l'installation de charge de batterie (BLA) comportent respectivement une interface utilisateur ayant une unité d'entrée (EE) pour changer un état de l'unité de charge de batterie (BLE1, BLE2) et/ou pour changer un état de fonctionnement (BZ) de l'installation de charge de batterie (BLA) et/ou ayant une unité de sortie (AE) qui affiche l'état de l'unité de charge de batterie (BLE1, BLE2) et/ou l'état de fonctionnement de l'installation de charge de batterie (BLA).

13. Procédé selon l'une des revendications 11 ou 12, dans lequel l'installation de charge de batterie (BLA), en cas de coupure de la liaison de communication (KV) entre les unités de charge de batterie (BLE1, BLE2) de l'installation de charge de batterie (BLA), prend respectivement un état de défaut de fonctionnement (F-BZ) et génère un message de défaut correspondant qui indique la coupure ayant eu lieu de la liaison de communication.

14. Procédé selon l'une des revendications 11 à 13,
dans lequel la réalisation d'une transition d'état de fonctionnement comprend de faire passer l'état de fonctionnement (BZ) de l'installation de charge de batterie (BLA) à un état de fonctionnement de fin de charge (LE-BZ) et le passage à l'état de fonctionnement de fin de charge (LE-BZ) n'a lieu que lorsque toutes les unités de charge de batterie prennent un état "charge terminée" (Lb).

15. Procédé selon la revendication 14,
dans lequel la réalisation d'une transition d'état de fonctionnement comprend de faire passer l'état de fonctionnement (BZ) de l'installation de charge de batterie (BA) à un état de fonctionnement (BZ) autre que l'état de fonctionnement de fin de charge (LE-BZ) dès que, pendant l'état de fonctionnement de charge (AL-BZ) de l'installation de charge de batterie (BLA), les unités de charge de batterie (BLE1, BLE2) ne communiquent pas ou ne prennent pas toutes l'état "charge terminée" (Lb).
